(19) Europäisches Patentamt
European Patent Office
Office européen des brevets

(11) **EP 3 095 682 B1**

(12) **EUROPÄISCHE PATENTSCHRIFT**

(45) Veröffentlichungstag und Bekanntmachung des Hinweises auf die Patenterteilung:
**07.03.2018  Patentblatt 2018/10**

(51) Int Cl.:
***B62K 25/04*** *(2006.01)*          ***F16F 9/53*** *(2006.01)*

(21) Anmeldenummer: **16170139.6**

(22) Anmeldetag: **18.05.2016**

(54) **FAHRWERKSTEUERUNG FÜR EIN MUSKELBETRIEBENES ZWEIRAD**

CHASSIS CONTROL FOR A MUSCLE- OPERATED BICYCLE

COMMANDE DE CHASSIS POUR UN DEUX-ROUES ENTRAINE PAR LA PUISSANCE MUSCULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2015   DE 102015107707**

(43) Veröffentlichungstag der Anmeldung:
**23.11.2016   Patentblatt 2016/47**

(73) Patentinhaber: **DT Swiss AG**
**2504 Biel (CH)**

(72) Erfinder:
• **Walthert, Martin**
  **CH-3270 Aarberg (CH)**
• **Wendel, Valentin**
  **3008 Bern (CH)**
• **Elsensohn, Gernot**
  **6771 St. Anton i. M. (AT)**
• **Pösel, Jürgen**
  **6700 Bludenz (AT)**

(74) Vertreter: **BSB Intellectual Property Law**
**Am Markt 10**
**59302 Oelde (DE)**

(56) Entgegenhaltungen:
EP-A2- 2 679 857          EP-A2- 2 679 859
DE-A1-102013 014 091     DE-T2- 60 320 456

**Beschreibung**

Die vorliegende Erfindung betrifft eine Fahrwerksteuerung für ein wenigstens teilweise muskelbetriebenes Zweirad und insbesondere ein Fahrrad mit wenigstens einem steuerbaren Stoßdämpfer.

Die Stoßdämpfung hat einen großen Einfluss auf die Fahreigenschaften und stellt daher ein wichtiges Merkmal von Fahrrädern und insbesondere Sportfahrrädern dar. Stoßdämpfer ermöglichen einen verbesserten Bodenkontakt und erlauben ein sportliches Fahren auch in einem extremen Gelände. Stoßgedämpfte Fahrräder weisen in der Regel eine Federgabel auf, welche häufig durch einen Hinterraddämpfer ergänzt wird. Üblicherweise umfasst ein Stoßdämpfer eine Federeinrichtung, um auftretende Stöße abzufedern und eine Dämpfungseinrichtung, um die Federschwingung zu dämpfen. Bei Stoßdämpfern für das Hinterrad werden die Federeinrichtung und die Dämpfereinrichtung in der Regel als integrale Einheit ausgebildet. Bei Federgabeln können die Dämpfungseinrichtung und die Federeinrichtung auch separat angeordnet werden.

Um die Vorteile einer Stoßdämpfung optimal ausnutzen zu können, ist in der Regel eine Einstellung der Dämpfungs- und Federeigenschaften unerlässlich. Kriterien für die Einstellung sind dabei beispielsweise das Gewicht des Fahrers und dessen Fahrweise sowie die Eigenschaften des Geländes, in dem gefahren werden soll. Dazu ist in der Regel eine Justierung des Stoßdämpfers nötig, bei der eine Reihe von Parametern für Dämpfung und Federung eingestellt und aufeinander abgestimmt werden müssen. Besonders für Anfänger ist eine solche Einstellung jedoch nicht immer unproblematisch. In Extremfällen ist es sogar möglich, dass durch eine Kombination ungünstiger Einstellungen die Fahreigenschaften verschlechtert werden. Zudem ist es während der Fahrt durch ein Gelände oft nicht möglich die Eigenschaften während der Fahrt zu verändern, so wie es eigentlich sinnvoll oder erforderlich wäre.

Es sind deshalb auch elektrisch steuerbare Stoßdämpfer bekannt geworden, bei denen eine elektrische Umschaltung der Stoßdämpfereigenschaften erfolgen kann.

Mit der DE 10 2012 012 532 A1 der Anmelderin sind ein Stoßdämpfer und ein Verfahren zum Betreiben eines Stoßdämpfers bekannt geworden, bei dem die Dämpfereinrichtung ein steuerbares Dämpfungsventil mit einer Felderzeugungseinrichtung umfasst, mit der ein feldempfindliches Medium wie ein magnetorheologisches Fluid beeinflussbar ist, um die Dämpfungskraft der Dämpfereinrichtung durch Anlegen einer Feldstärke der Felderzeugungseinrichtung zu beeinflussen. Bei diesem bekannten Dämpfer wird die Dämpfungskraft der Dämpfereinrichtung in Echtzeit eingestellt. Dazu werden Ereignisse in Form von Stößen erkannt und es wird eine Relativgeschwindigkeit der Dämpferenden periodisch ermittelt. Zur Dämpfung wird aus der Relativgeschwindigkeit ein Kennwert abgeleitet und mit dem Kennwert wiederum eine einzustellende Feldstärke aus einer Dämpferkennlinie abgeleitet. In Echtzeit wird mit der Felderzeugungseinrichtung die einzustellende Feldstärke erzeugt, um die Dämpfungskraft in Echtzeit einzustellen. Mit diesem bekannten Stoßdämpfer kann flexibel auf alle Arten von Stößen eingegangen werden, da nach der Erkennung einer Relativbewegung der Stoßdämpfer direkt passend eingestellt wird. Für eine genaue Steuerung ist eine genaue Sensorik erforderlich. Bei diesem bekannten Stoßdämpfer wird ein Magnetpotenziometer eingesetzt, bei denen der Magnet die Einstellung des Potenziometers vorgibt, sodass aus der Stellung des Potenziometers direkt auch eine absolute Feststellung des Ein- bzw. Ausfederungszustandes des Stoßdämpfers möglich ist. Die DE 10 2012 012 532 A1 offenbart eine Fahrwerksteuerung gemäß dem Oberbegriff von Anspruch 1.

Der bekannte Stoßdämpfer liefert sehr zufriedenstellende Ergebnisse. Für eine noch bessere Steuerung ist ein noch genauerer Sensor wünschenswert. Dabei ist aber zu beachten, dass auf dem vorgesehenen Einsatzgebiet der Preis derartiger Sensoren eine entscheidende Rolle spielt. Außerdem sind die Stückzahlen nicht so hoch, wie beispielsweise bei Kraftfahrzeugen. Außerdem müssen die Sensoren noch härteren Umweltbedingungen standhalten, da sie im tiefsten Winter direkt den Außentemperaturen ausgesetzt sein können und sich im Sommer - aber auch im Winter - auf hohe Temperaturen aufheizen können. Deshalb ist ein Temperaturintervall von 60° oder 80° oder sogar 100° Kelvin möglich. Der Temperaturbereich kann sich im Betrieb zwischen beispielsweise minus 30°C und plus 80°C erstrecken, in dem der Sensor zuverlässig arbeiten muss.

Es ist deshalb die Aufgabe der vorliegenden Erfindung, eine Fahrwerksteuerung für ein wenigstens teilweise muskelbetriebenes Zweirad mit wenigstens einem steuerbaren Stoßdämpfer zur Verfügung zu stellen, womit bei mäßigem oder sogar verringertem Aufwand gleiche und insbesondere bessere Ergebnisse erzielbar sind.

Diese Aufgabe wird gelöst durch eine Fahrwerksteuerung mit den Merkmalen des Anspruchs 1. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Fahrwerksteuerung für ein wenigstens teilweise muskelbetriebenes Zweirad umfasst wenigstens einen steuerbaren Stoßdämpfer. Der Stoßdämpfer umfasst zwei relativ zueinander bewegbare Anschlusseinheiten oder Komponenten, zwischen denen zur Dämpfung von Stößen wenigstens eine Dämpfereinrichtung und wenigstens eine Federeinrichtung vorgesehen sind. Weiterhin ist wenigstens eine Sensoreinrichtung zur Erfassung von Messdaten wenigstens über eine Relativbewegung der Anschlusseinheiten zueinander vorgesehen. Wenigstens eine elektrische Steuereinrichtung dient zur Steuerung des wenigstens einen Stoßdämpfers. Dabei umfasst die Sensoreinrichtung wenigstens eine mit einer der Anschlusseinheiten des Stoßdämpfers verbundene Maßstabeinrichtung, die sich in einer Bewegungsrichtung der Relativbewegung über eine Messstrecke erstreckt. Die Maßstabeinrichtung kann auch als strukturierte Maßstabeinrichtung bezeichnet werden und weist über der Messstrecke eine Struktur mit sich periodisch wiederholenden magnetischen Eigenschaften auf. Insbesondere bildet jede Periode oder doch wenigstens im Wesentlichen jede der periodischen Struktur einen Sensorabschnitt der Sensoreinrichtung. Möglich ist es, dass die Maßstabeinrichtung die Struktur mit sich periodisch wiederholenden magnetischen Eigenschaften bildet. Die Sensoreinrichtung umfasst einen mit der Maßstabeinrichtung zusammenwirkenden und mit der Anderen der Anschlusseinheiten des Stoßdämpfers verbundenen Detektorkopf zur Ermittlung einer Position des Stoßdämpfers.

Die erfindungsgemäße Fahrwerksteuerung hat viele Vorteile. Ein erheblicher Vorteil der erfindungsgemäßen Fahrwerksteuerung ist, dass die strukturierte Maßstabeinrichtung der Sensoreinrichtung eine Struktur mit sich periodisch wiederholenden magnetischen Eigenschaften aufweist. Dadurch kann eine hochauflösende Ortsbestimmung erreicht werden, da der Detektorkopf sich an der periodischen Struktur orientiert und darüber hinaus durch Auswertung z. B. der magnetischen Feldstärke eine hochgenaue Positionsermittlung durchführen kann.

Insbesondere ist die Struktur als eine regelmäßige periodische Struktur ausgebildet, die sich ändernde und periodisch wiederholende magnetische Eigenschaften aufweist. Dabei hat die Maßstabeinrichtung eine Struktur und jede Periode der periodischen Struktur bildet einen Maßstababschnitt oder einen Sensorabschnitt der Sensoreinrichtung.

Vorzugsweise weist die Maßstabeinrichtung eine regelmäßige periodische Struktur von sich ändernden magnetischen und/oder elektrischen Eigenschaften auf. Die einzelnen Perioden der periodischen Struktur können gleiche oder auch unterschiedliche Abstände haben. So ist es zum Beispiel möglich, dass sich zu einem Ende hin kleinere (oder größere) Periodenabstände ergeben.

Die Maßstabeinrichtung kann als Sensorband ausgeführt sein und erstreckt sich über eine Messstrecke bzw. Messlänge. Dabei hat die Maßstabeinrichtung vorzugsweise ein sich wiederholendes Muster.

Die Sensoreinrichtung kann zwei (oder mehr) Sensorteile umfassen, wobei das erste Sensorteil mit der einen Anschlusseinheit und das zweite Sensorteil mit der anderen Anschlusseinheit verbunden sind. Eines der beiden Sensorteile bildet den Detektorkopf oder umfasst den Detektorkopf und an dem anderen der beiden Sensorteile ist die (strukturierte) Maßstabeinrichtung vorgesehen, ausgebildet oder befestigt. Vorzugsweise wird die (genaue) Position durch Interpolation ermittelt bzw. es wird die Genauigkeit der Positionsermittlung durch Interpolation gesteigert.

In einer bevorzugten Weiterbildung der Erfindung weist die Dämpfereinrichtung eine erste Dämpferkammer und wenigstens eine zweite Dämpferkammer auf. Dabei sind die erste Dämpferkammer und die zweite Dämpferkammer über wenigstens ein Dämpfungsventil miteinander gekoppelt. Insbesondere ist wenigstens ein Dämpfungsventil vorzugsweise elektrisch steuerbar. Vorzugsweise sind die erste Dämpferkammer und die zweite Dämpferkammer durch einen Dämpfungskolben voneinander getrennt, der mit einer Kolbenstange verbunden ist. Vorzugsweise ist das Dämpfungsventil in dem Dämpfungskolben ausgebildet.

In einer bevorzugten Weiterbildung ist dem oder wenigstens einem Dämpfungsventil wenigstens eine Magnetfelderzeugungseinrichtung zugeordnet, welche zur Erzeugung und Steuerung eines Magnetfeldes in wenigstens einem Dämpfungskanal des Dämpfungsventils dient. In dem Dämpfungskanal ist ein magnetorheologisches Medium vorgesehen. Möglich ist es auch, dass das magnetorheologische Medium sich in beiden Dämpferkammern befindet. Über eine Steuerung des Dämpfungsventils kann wenigstens eine Eigenschaft des Stoßdämpfers eingestellt werden und die Dämpfereinrichtung kann in Abhängigkeit von den Messdaten der Sensoreinrichtung gesteuert werden.

Vorzugsweise ist der Detektorkopf benachbart zu der Maßstabeinrichtung angeordnet. Besonders bevorzugt ist der Detektorkopf beabstandet von und benachbart zu der Maßstabeinrichtung angeordnet. Dadurch wird eine berührungslose und verschleißfreie Detektion ermöglicht.

In bevorzugten Ausgestaltungen weist die Maßstabeinrichtung Sensorabschnitte auf, wobei vorzugsweise jeder Sensorabschnitt einer Periode der Struktur entspricht. Vorzugsweise weist wenigstens ein Sensorabschnitt oder im Wesentlichen jeder oder genau jeder Sensorabschnitt eine Länge in Bewegungsrichtung von wenigstens 0,25 mm auf. Dabei wird ein Sensorabschnitt insbesondere durch eine Periode der periodischen Struktur der Maßstabeinrichtung gebildet. Besonders bevorzugt weist der Sensorabschnitt eine Länge in Bewegungsrichtung von wenigstens 0,5 mm und vorzugsweise wenigstens 1 mm auf. Möglich und bevorzugt ist auch eine Länge eines Sensorabschnitts von 2 mm, 3 mm, 4 mm, 5 mm, 6mm, 8 mm oder 10 mm oder mehr.

Besonders bevorzugt entspricht die Messstrecke der Maßstabeinrichtung in Bewegungsrichtung wenigstens im Wesentlichen einem Dämpferhub. Es ist möglich, dass die Messstrecke etwas kürzer als ein Dämpferhub ist. Vorzugsweise ist eine Länge der Messstrecke so lang wie ein Dämpferhub und kann auch etwas größer sein. Die Messstrecke kann auch deutlich länger als der Dämpferhub in Bewegungsrichtung sein. Beispielsweise ist es möglich, dass sich bei einer linearen Bewegung der Dämpfereinrichtung die Messstrecke in Zick-Zack-Form oder in Wendelform oder in einer sonstigen Kurvenform in Bewegungsrichtung erstreckt, sodass die Kurvenlänge der Messstrecke erheblich größer als der Dämpferhub ist.

In anderen bevorzugten Ausgestaltungen arbeitet der Stoßdämpfer rotativ, sodass zur Dämpfung die beiden Anschlusseinheiten des Stoßdämpfers gegeneinander verschwenkt oder gedreht werden. Dann ist es bevorzugt, dass sich die Messstrecke auf einer Kurvenbahn um die Schwenkachse oder Rotationsachse erstreckt.

Beispielsweise kann die Maßstabeinrichtung auf einem Innenumfang oder einem Außenumfang eines Bauteils angeordnet sein, welches mit einer der Anschlusseinheiten fest verbunden ist.

In bevorzugten Weiterbildungen umfasst der Detektorkopf wenigstens einen Detektor und besonders bevorzugt eine Mehrzahl von Detektoren, wobei das Detektorsignal des wenigstens einen Detektors auswertbar ist. Insbesondere ist es möglich, dass aus der Mehrzahl der erfassten Detektorsignale innerhalb oder außerhalb des Detektorkopfs ein Sensorsignal generiert wird.

Vorzugsweise weist der Detektorkopf eine Mehrzahl von in Bewegungsrichtung versetzt angeordneten Detektoren auf. Dabei ist es möglich, dass die Detektorsignale der einzelnen Detektoren derart auswertbar sind, dass insgesamt ein Sensorsignal ausgegeben wird, welches eine höhere Auflösung oder höhere Genauigkeit aufweist. Dabei kann das eine Sensorsignal wieder aus mehreren Kanälen oder Phasen bestehen. Die einzelnen Detektoren des Detektorkopfs dienen vorzugsweise dazu, eine relative Position relativ zu der periodischen Struktur der Maßstabeinrichtung zu erfassen. Durch zwei versetzte Detektoren relativ zu der Maßstabeinrichtung können die Auflösung und die Genauigkeit erheblich erhöht werden.

Insbesondere ist eine Signalstärke der einzelnen Detektorsignale auswertbar, um eine Bestimmung der Position mit einer Ortsauflösung zu ermöglichen, die kleiner ist als eine Länge eines Sensorabschnitts. Insbesondere ist die Ortsauflösung genauer als 0,1 mm und vorzugsweise wird eine Ortsauflösung von 50 $\mu$m oder kleiner 10 $\mu$m ermöglicht. Die Ortsauflösung kann dabei genauer als 5 $\mu$m oder kleiner als 2 $\mu$m sein. Auflösungen von 1 $\mu$m und besser sind auch bevorzugt.

Da der Detektorkopf mit der Maßstabeinrichtung zusammenwirkt, kann aufgrund der lokalen physikalischen bzw. magnetischen Eigenschaft der Maßstabeinrichtung aus der mit dem Detektorkopf gemessenen Intensität eine Position des Stoßdämpfers abgeleitet werden. Die gemessene Intensität kann beispielsweise die Feldstärke eines elektrischen oder magnetischen Feldes sein. Die magnetischen Eigenschaften der Struktur können ein mit dem Detektorkopf gemessenes Magnetfeld oder auch eine wirksame elektrische Feldstärke beeinflussen. Möglich ist auch die Messung einer kapazitiven Größe oder dergleichen mehr, die durch die magnetischen Eigenschaften der Struktur und die relative Position des Detektorkopfs beeinflusst wird.

Insbesondere beträgt ein Verhältnis einer Länge eines Sensorabschnitts zu einer Ortsauflösung der Bestimmung der Position mehr als 100 und vorzugsweise ist das Verhältnis größer als 1000.

Vorzugsweise können in der Sensoreinrichtung die Signale von zumindest einem Detektor derart ausgewertet werden, dass über die Schnittstelle von der Position oder Bewegung des Stoßdämpfers abhängige Größen wie absolute oder relative Position, Geschwindigkeit, Richtung, Beschleunigung oder auch Ruck ausgegeben werden können.

In besonders bevorzugten Ausgestaltungen umfasst die (strukturierte) Maßstabeinrichtung eine Vielzahl von Felderzeugungseinheiten. Dabei können derartige Felderzeugungseinheiten beispielsweise als Permanentmagnete oder auch als elektrische Spulen ausgebildet sein. Permanentmagnete haben den Vorteil, dass sie permanent ein Magnetfeld erzeugen und deshalb unabhängig von einer Stromzufuhr ein strukturiertes Magnetfeld an der Maßstabeinrichtung zu Verfügung stellen. Vorzugsweise wird in solchen Fällen ein Magnetfeldsensor als Detektor an den Detektorkopf eingesetzt. Vorzugsweise werden wenigstens zwei Magnetfeldsensoren als Detektoren verwendet. Derartige Magnetfeldsensoren können beispielsweise eine elektrische Spule oder einen Hallsensor oder andere Sensortypen umfassen oder derart ausgebildet sein.

Durch die Verwendung von einer Vielzahl von Felderzeugungseinrichtungen an der Maßstabeinrichtung und durch wenigstens einen Magnetfeldsensor als Detektor an dem Detektorkopf kann eine hochgenaue Ortsbestimmung ermöglicht werden. Dabei erfasst der Detektorkopf eine Signalstärke des von den Felderzeugungseinheiten ausgesendeten Magnetfeldes, sodass über die Intensität eine genaue Positionsbestimmung bei einer Relativbewegung der Anschlusseinheiten zueinander erfassbar ist. Bevorzugt wertet zumindest ein Feldsensor in dem Detektorkopf die Stärke und Form des Feldes, bei vektorieller Darstellung des Feldes also Richtung und Betrag des Feldes, aus und generiert ein der Relativposition entsprechendes Signal.

Wenn die Maßstabeinrichtung eine beispielsweise exakte periodische Struktur aufweist, so kann aus den Signalen des Detektorkopfs nur eine relative Positionsänderung, nicht aber die Absolutposition direkt ermittelt werden. Es ist bevorzugt, dass in der Steuereinrichtung ein Zähler gesetzt wird, der die Anzahl der Periodendurchgänge und die Richtung der Periodenwechsel erfasst, sodass jederzeit eine exakte Ortsbestimmung möglich ist.

Möglich ist es auch, dass Endsensoren vorgesehen sind, die am oder in der Nähe des jeweiligen Hubendes eine Kalibrierung der Ortsposition ermöglichen. Bevorzugt wird zur Kalibrierung wenigstens ein Index verwendet, der einer genau definierten Position entspricht, welche im normalen Betrieb häufig erreicht wird. Dabei kann dieser Index einer speziellen Markierung oder lokalen Gestaltung der Maßstabeinrichtung entsprechen oder als eigenes Signal eines zusätzlichen Feldsensors im Detektorkopf erzeugt werden.

In besonders bevorzugten Ausgestaltungen umfasst die Maßstabeinrichtung wenigstens eine Vielzahl von Permanentmagneten als Magneteinheiten. In einer einfachen Variante sind die Permanentmagnete mit alternierenden Polen Nord-Süd bzw. alternierender Polarität periodisch angeordnet. Möglich ist es aber auch, dass die Maßstabeinrichtung als Magnetband ausgeführt ist, bei dem sich periodisch Permanentmagnete mit nichtmagnetischen oder mit geringer magnetisierten Bereichen abwechseln. So können auch unterschiedlich starke Pole gleicher Polarität (z.B. Nordpole) abwechselnd angeordnet werden. Oder es werden in einer Periode mehrere unterschiedlich starke Permanentmagnete angeordnet. Vorzugsweise sind bei diesen Varianten zwei oder mehr Detektoren an dem Detektorkopf vorgesehen, die so angeordnet sind, dass auch eine Bewegungsrichtung der Relativbewegung erkennbar ist.

In einer bevorzugten Weiterbildung weist wenigstens eine Mehrzahl von jeweils zwei unmittelbar benachbarten Magneteinheiten und insbesondere Permanentmagneten eine unterschiedliche Polung auf. Möglich ist aber auch eine gleiche Polausrichtung mit zum Beispiel unterschiedlicher Feldstärke.

Vorzugsweise bildet eine Vielzahl von Magneteinheiten bzw. Permanentmagneten einen Magnetstack (Magnetstapel). Der Magnetstack stellt dann im Wesentlichen die Maßstabeinrichtung zur Verfügung. Zwischen den Permanentmagneten kann ein (insbesondere dünnes) Trennelement vorgesehen sein. Eine Länge eines Trennelements ist vorzugsweise kleiner als 25% und insbesondere kleiner als 10% und vorzugsweise keiner als 5% einer Länge eines Permanentmagneten in Längsrichtung des Magnetstacks.

In solchen Ausgestaltungen umfasst die Maßstabeinrichtung eine Vielzahl von in einer Bewegungsrichtung voneinander beabstandeten magnetischen Pole. Insbesondere sind die Pole vorzugsweise alternierend (oder quer zueinander) angeordnet, sodass der Detektorkopf bei einer Relativbewegung jeweils Nordpol und Südpol abwechselnd detektiert. Der Detektorkopf erfasst die Stärke des Magnetfeldes und interpoliert den Ort bzw. leitet den Ort aus den Signalen bzw. dem lokalen Magnetfeld ab. Beispielsweise ist es in bevorzugten Ausgestaltungen der Fall, dass eine Art von Sinussignal erwartet wird. Der Detektorkopf erfasst das Feldstärkensignal und über die gemessene Intensität ergibt sich der Ort. Dabei kann über zwei oder mehr Detektoren, die insbesondere ortsfest und vorzugsweise in Bewegungsrichtung versetzt zueinander angeordnet sind, eine bessere Selektion und eine höhere Genauigkeit und Auflösung erzielt werden. Bei diesen Ausgestaltungen erstrecken sich über eine Periode der Maßstabeinrichtung wenigstens zwei magnetisch unterschiedliche Baueinheiten, die sich über die unterschiedlichen Perioden jeweils abwechseln. Bei zwei in Bewegungsrichtung versetzt zueinander angeordneten Detektoren kann einer eine Art von Sinussignal und einer eine Art von Cosinussignal erfassen, sodass die Ortsauflösung gesteigert und die Bewegungsrichtung erkannt werden kann.

Vorzugsweise ist die Maßstabeinrichtung wenigstens teilweise ferromagnetisch ausgebildet und weist eine periodische und ferromagnetisch ausgebildete Struktur auf.

Es ist möglich, dass die Maßstabeinrichtung eine leiterartige und/oder zahnartige Struktur aufweist. Beispielsweise kann die Maßstabeinrichtung als Zahnstange oder als Leiterstruktur ausgebildet sein. Dabei kann diese Struktur auch dreidimensional ausgeführt sein, bevorzugt entlang der Bewegungsrichtung als Mantel oder Teil des Mantels eines Zylinders, sodass die Struktur in z. B. einer Richtung kreisbogenförmig, ringförmig oder beispielsweise rippenförmig erscheint. Auch bei solchen Strukturen aus ferromagnetischen Materialien oder aus Permanentmagneten ändern sich periodisch die magnetischen Eigenschaften.

In solchen Ausgestaltungen ist es möglich und bevorzugt, dass an den Detektorkopf wenigstens eine Magnetfelderzeugungseinrichtung angeordnet ist. Insbesondere ist die Magnetfelderzeugungseinrichtung auch an dem Detektorkopf befestigt. Die Magnetfelderzeugungseinrichtung kann als Permanentmagnet oder als elektrische Spule ausgebildet sein. Bei einer solchen Ausgestaltung ist es möglich, dass beispielsweise eine ferromagnetische Zahnstange an der Maßstabeinrichtung eingesetzt wird und dass an dem Detektorkopf ein Permanentmagnet als Magnetfelderzeugungseinrichtung und zum Beispiel zwei Detektoren vorgesehen sind. Dabei funktioniert die Messung derart, dass das von der Magnetfelderzeugungseinrichtung erzeugte Magnetfeld durch die ferromagnetisch ausgebildete Struktur der Maßstabeinrichtung verändert wird, da sich das Magnetfeld vorzugsweise in den ferromagnetischen Bereichen der Maßstabeinrichtung konzentriert. Dadurch erfassen die (zwei) als Magnetfeldsensoren ausgebildeten Detektoren des Detektorkopfs je nach Position des Stoßdämpfers entsprechend unterschiedliche Magnetfelder, sodass über eine Auswertung der Intensität eine hochgenaue Ortsbestimmung möglich ist. Auch hier ist im einfachsten Fall wieder keine absolute Bestimmung des Ortes, sondern nur eine relative Bestimmung des Einfederzustandes möglich. Dies kann aber durch Zählen der Periodendurchgänge oder auch andere Maßnahmen ausgeglichen werden.

In einer anderen und besonders bevorzugten Ausgestaltung ist der Detektorkopf (auch Messkopf genannt) dazu ausgebildet und eingerichtet, mit der Magnetfelderzeugungseinrichtung ein magnetisches Wechselfeld zu erzeugen. Der Detektorkopf ist weiterhin dazu ausgebildet und eingerichtet, eine durch die Maßstabeinrichtung beeinflusste Feldstärke des magnetischen Wechselfeldes zu erfassen, um aus der Feldstärke die Position des Stoßdämpfers abzuleiten. Bei einer solchen Ausgestaltung ergibt sich eine weitere Messvariante, bei der die Maßstabeinrichtung beispielsweise eine periodische Struktur mit elektrisch leitenden Elementen aufweist.

Beispielsweise können eine elektrisch leitende Zahnstange oder eine leiterähnliche Struktur vorgesehen sein. Bei dieser Variante erzeugt die Magnetfelderzeugungseinrichtung des Detektorkopfs ein ausreichend hochfrequentes magnetisches Wechselfeld, welches in elektrisch leitenden Bauteilen entsprechende Wirbelströme erzeugt, die wiederum der Erregung entgegengesetzte magnetische Wechselfelder erzeugen. Dadurch werden die Magnetfeldlinien der Magnetfelderzeugungseinrichtung praktisch um die elektrisch leitende Struktur der Maßstabeinrichtung herumgelenkt, sodass die als Magnetfeldsensoren ausgebildeten Detektoren des Detektorkopfs aus der jeweils erfassten Feldstärke die Position des Stoßdämpfers ableiten. Bei einer solchen Variante wird beispielsweise eine elektrisch leitende Zahnstange oder eine periodische Anordnung von elektrisch leitenden Teilen zur Positionsbestimmung verwendet.

In allen Ausgestaltungen ist es bevorzugt, dass die Federeinrichtung eine Luftfeder mit einem Federgehäuse und wenigstens einer darin vorgesehenen Luftkammer umfasst. Besonders bevorzugt umgibt das Federgehäuse die Dämpfereinrichtung wenigstens abschnittsweise. Dies gilt insbesondere für Stoßdämpfer, die am Hinterrad eingesetzt werden.

In diesen Ausgestaltungen ist es möglich, dass der Detektorkopf wenigstens teilweise innerhalb des Federgehäuses angeordnet ist. Vorzugsweise ist die Dämpfereinrichtung mit einem Federungskolben verbunden, der die Luftkammer in eine Positivkammer und eine Negativkammer teilt.

Besonders bevorzugt ist der Detektorkopf an dem Federungskolben befestigt. Möglich ist es auch, dass der Detektorkopf in einem radial äußeren Bereich angeordnet ist. Beispielsweise könnte der Detektorkopf auch radial innen von der Federungskolbendichtung angeordnet sein.

Es ist bevorzugt, dass das Federgehäuse wenigstens zu einem erheblichen Teil aus einem Faserverbundwerkstoff besteht. Dabei kann das Federgehäuse wenigstens abschnittsweise oder auch vollständig aus wenigstens einem Faserverbundwerkstoff bestehen. Möglich ist es beispielsweise, dass der zylindrische Teil des Gehäuses oder das Gehäuse - abgesehen von einem Gehäusedeckel - im Wesentlichen ganz oder auch vollständig aus einem Faserverbundwerkstoff besteht.

In diesen und anderen Ausgestaltungen ist es möglich, dass die Maßstabeinrichtung an dem Federgehäuse angebracht, befestigt oder aufgenommen ist. Dabei kann die Maßstabeinrichtung außen an dem Federgehäuse angebracht sein, insbesondere dann, wenn das Federgehäuse wenigstens zum Teil aus einem Faserverbundwerkstoff besteht. Möglich ist es aber auch, dass die Maßstabeinrichtung in das Federgehäuse integriert ist. In diesen Fällen kann der Detektorkopf vollständig oder teilweise von innen oder auch von außen durch das Federgehäuse hindurch messen. Das ist insbesondere dann vorteilhaft, wenn über magnetische Wechselfelder durch das Federgehäuse hindurch gemessen werden soll. Eine bevorzugte Ausgestaltung sieht ein nicht ferromagnetisches Federgehäuse vor, besonders bevorzugt aus Aluminium, welches fest mit der Maßstabeinrichtung verbunden ist, welche ein von der Position abhängiges magnetisches Feld erzeugt.

Es ist auch möglich und bevorzugt, dass die Maßstabeinrichtung und der Detektorkopf außen an dem Stoßdämpfer angebracht sind. Eine solche Weiterbildung erlaubt einen einfachen Zugang zu der Sensoreinrichtung.

In allen Ausgestaltungen ist es möglich und bevorzugt, dass die Maßstabeinrichtung zusätzliche absolute Positionsmarken aufweist, wobei eine Positionsmarke als beispielsweise Endlagensensor ausgebildet sein kann. Solche Positionsmarken können auch in der periodischen Struktur der Maßstabeinrichtung eingebettet sein. Beispielsweise kann bei einer magnetischen periodischen Struktur sich über der Länge der Maßstabeinrichtung ein Gleichanteil einer Feldstärke verändern, sodass die lokalen Veränderungen der Feldstärke zur Positionsbestimmung und ein Mittelwert einer Feldstärke oder der Gleichanteil über eine Periode den absoluten Ort definieren.

Möglich ist auch der Einsatz von Positionsmarken über mechanische oder kapazitive Schalter (z. B. Endschalter) oder dergleichen mehr.

Vorzugsweise ist die Maßstabeinrichtung insbesondere physikalisch oder möglicherweise virtuell über unterschiedliche magnetische Codierungen in zumindest zwei in Bewegungsrichtung parallele Bahnen unterteilt.

Besonders bevorzugt ist die Maßstabeinrichtung innerhalb des Dämpfergehäuses oder innerhalb des Federgehäuses angeordnet. Eine solche Konstruktion ermöglicht einen besonders kompakten und robusten Aufbau. Ein Aufbau mit einem außerhalb des Gehäuses (Dämpfergehäuse oder Federgehäuse) angeordneten Sensor ist dann nicht nötig. Ein solcher außen liegender Sensor weist gegeneinander bewegliche Teile auf, die nicht derart vor Verschmutzung und äußerer Krafteinwirkung geschützt sind.

Mit der Erfindung können ein kostengünstiger und hochgenau steuerbarer Stoßdämpfer und somit eine entsprechende Fahrwerkssteuerung zur Verfügung gestellt werden. In einfachen Fällen besteht die Fahrwerkssteuerung aus einem steuerbaren Stoßdämpfer und der zugehörigen Steuereinrichtung, die in den Stoßdämpfer integriert oder außen daran angebracht sein kann. Möglich ist es auch, dass eine zentrale Steuereinrichtung vorgesehen ist, die mit einer lokalen Steuereinrichtung an dem Stoßdämpfer zusammenarbeitet. Des Weiteren weisen Weiterbildungen der Fahrwerkssteuerung und des Stoßdämpfers Merkmale auf, wie sie in der DE 10 2012 012 532 A1 beschrieben sind. Insbesondere funktioniert die Steuerung der Dämpfung in Abhängigkeit von Kennwerten so, wie es in der DE 10 2012 012 532 A1 beschrieben ist, sodass sich grundsätzlich ähnliche Kurvenverläufe bei Stößen ergeben.

Weitere Vorteile und Merkmale der vorliegenden Erfindung ergeben sich aus den Ausführungsbeispielen, welche mit Bezug auf die beiliegenden Figuren erläutert werden.

In den Figuren zeigen:

Fig. 1          eine schematische Darstellung eines Fahrrads mit einer erfindungsgemäßen Fahrwerksteuerung;

Fig. 2          eine schematische Darstellung der Fahrwerksteuerung;

Fig. 3a      eine schematische Ansicht einer Federgabel des Fahrrads nach Figur 1;

Fig. 3b      eine schematische geschnittene Ansicht eines Stoßdämpfers für das Hinterrad des Fahrrads nach Figur 1;

Fig. 4      eine schematische geschnittene Darstellung eines weiteren Stoßdämpfers für das Fahrrad nach Figur 1;

Fig. 5      die Sensoreinrichtung des Stoßdämpfers nach Figur 3a in einer vergrößerten Darstellung;

Fig. 6      eine alternative Sensoreinrichtung für die Stoßdämpfer des Fahrrads nach Figur 1;

Fig. 7      eine weitere Sensoreinrichtung für die Stoßdämpfer des Fahrrads nach Figur 1;

Fig. 8      noch eine Sensoreinrichtung für die Stoßdämpfer des Fahrrads nach Figur 1;

Fig. 9      eine schematische Darstellung der Datenaufbereitung der mit der Sensoreinrichtung gemessenen Daten; und

Fig. 10a bis 10c      reale Messdaten des Stoßdämpfers nach Figur 4.

Mit Bezug auf die beiliegenden Figuren werden Ausführungsbeispiele und Varianten der Erfindung anhand einer Fahrwerksteuerung 300 mit einer Dämpfereinrichtung 1 für ein Fahrrad beschrieben.

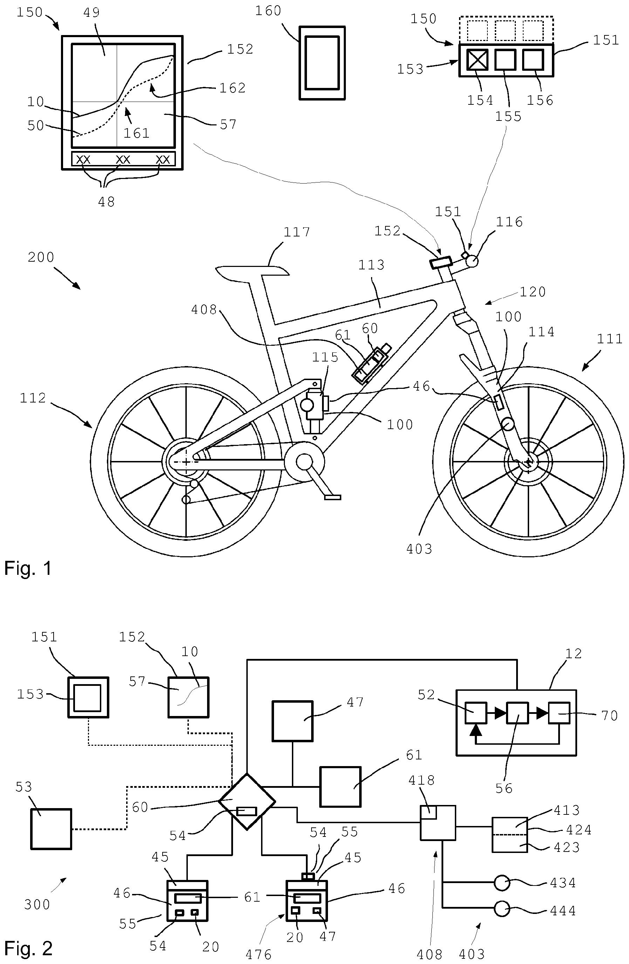

Fig. 1 zeigt eine schematische Darstellung eines Fahrrades 200, welches hier als Mountainbike ausgeführt ist und einen Rahmen 113 sowie ein Vorderrad 111 und ein Hinterrad 112 aufweist. Sowohl das Vorderrad 111 als auch das Hinterrad 112 sind mit Speichen ausgerüstet und können über die dargestellten Scheibenbremsen verfügen. Eine Gangschaltung dient zur Wahl des Übersetzungsverhältnisses. Weiterhin weist das Fahrrad 200 eine Lenkeinrichtung 116 mit einem Lenker auf. Weiterhin ist ein Sattel 117 vorgesehen.

Das Vorderrad 111 verfügt über einen als Federgabel 114 ausgeführten Stoßdämpfer 100 und an dem Hinterrad 112 ist ein als Hinterraddämpfer 115 ausgeführter Stoßdämpfer 100 vorgesehen.

Die Fahrwerksteuerung 300 umfasst im einfachsten Fall einen Stoßdämpfer 100 und eine Steuereinrichtung 46. Möglich ist es auch, dass die Fahrwerksteuerung 300 zwei Stoßdämpfer 100 (Federgabel und Hinterradstoßdämpfer) umfasst, an denen jeweils eine Steuereinrichtung 46 vorgesehen ist. Oder die Fahrwerksteuerung 300 umfasst zwei Stoßdämpfer 100 und eine zentrale Steuereinrichtung 60. Besonders bevorzugt umfasst die Fahrwerksteuerung 300 zwei Stoßdämpfer 100 und eine zentrale Steuereinrichtung 60 und jeweils eine Steuereinrichtung 46 an jedem Stoßdämpfer. Die (zentrale) Steuereinrichtung 60 kann zur Einstellung der Vorgaben und zur Koordination der beiden Stoßdämpfer dienen.

Die zentrale Steuereinrichtung 60 ist hier zusammen mit einer Batterieeinheit 61 in einem trinkflaschenartigen Behälter vorgesehen und an dem Unterrohr angeordnet, wo sonst eine Trinkflasche angeordnet ist, kann aber auch im Rahmen vorgesehen werden. Die zentrale Steuereinrichtung 60 kann auch an dem Lenker 116 angeordnet werden.

Die zentrale Steuereinrichtung 60 dient hier im Ausführungsbeispiel nach Fig. 1 zur Steuerung des Fahrwerks und steuert hier sowohl die Federgabel 114 als auch den Hinterradstoßdämpfer 115 jeweils separat und hier insbesondere synchron bzw. aufeinander abgestimmt.

Die Steuerung der Stoßdämpfer 100 und weiterer Fahrradkomponenten kann in Abhängigkeit verschiedenster Parameter erfolgen und erfolgt im Wesentlichen auch anhand von sensorisch erfassten Daten. Gegebenenfalls können auch die Feder- und/oder Dämpfungseigenschaften der Sattelstütze eingestellt werden. Es ist möglich, dass mit der zentralen Steuereinrichtung 60 auch die Schaltung zum Einstellen verschiedener Übersetzungen gesteuert werden kann. Insbesondere kann auch eine Alterung des Dämpfungsmediums, der Federeinrichtung und weiterer Komponenten berücksichtigt werden. Es ist auch bevorzugt, die Temperatur des Stoßdämpfers 100 zu berücksichtigen (Federgabel 114 und/oder Hinterradstoßdämpfer 115). Dabei kann insbesondere die Temperatur wenigstens der Dämpfereinrichtung 1 berücksichtigt werden.

Zusätzlich weist hier jeder Stoßdämpfer 100 wenigstens eine Steuereinrichtung 46 an einer hier austauschbar vorgesehenen Elektronikeinheit auf. Die Elektronikeinheiten können jeweils separate Batterieeinheiten aufweisen. Bevorzugt ist aber eine Energieversorgung durch die zentrale Batterieeinheit 61 oder die Unterstützung oder der Betrieb durch einen Dynamo oder dgl.

Die Fahrwerksteuerung 300 und die zentrale Steuereinrichtung 60 werden über Bedieneinrichtungen 150 bedient. Es sind zwei Bedieneinrichtungen 150 vorgesehen, nämlich eine Betätigungseinrichtung 151 und eine Einstelleinrichtung 152. Die Betätigungseinrichtung 151 weist mechanische Eingabeeinheiten 153 an den seitlichen Enden oder in der Nähe der seitlichen Enden des Lenkers 116 auf. Die Einstelleinrichtung 152 kann als Fahrradcomputer ausgeführt sein und ebenfalls am Lenker 116 positioniert werden. Möglich ist es aber auch, dass ein Smartphone 160, oder ein Tablett oder dergleichen als Einstelleinrichtung 152 eingesetzt wird und beispielsweise in der Tasche oder in dem Rucksack des Benutzers aufbewahrt wird, wenn keine Veränderung der Einstellungen vorgenommen wird.

Die Betätigungseinrichtung 151 umfasst hier drei mechanische Eingabeeinheiten als Bedienelemente 154, 155, 156 zur Bedienung des Stoßdämpfers 100. Es ist möglich, dass für die Federgabel 114 eine Betätigungseinrichtung 151 an einem Ende des Lenkers 116 angeordnet ist und das an dem anderen Ende des Lenkers eine entsprechende weitere Betätigungseinrichtung 151 für den Hinterradstoßdämpfer 115 vorgesehen ist. Möglich ist es auch, dass beide Stoßdämpfer mit einer Betätigungseinrichtung 151 synchron gesteuert werden. Möglich ist es auch, dass an einem seitlichen Ende des Lenkers 116 eine Betätigungseinrichtung mit beispielsweise sechs unterschiedlichen Bedienelementen zur Einstellung beider Stoßdämpfer 100 angeordnet ist.

Die Betätigungseinrichtung 151 ist erheblich robuster und widerstandsfähiger ausgeführt als die Bedieneinrichtung 152 und wird hier fest an dem Lenker 116 montiert. Die einzelnen als Druckschalter oder Taster ausgeführten Bedienelemente 154 bis 156 weisen jeweils Schutz gemäß IP54 oder besser IP67 nach DIN EN 60529 auf. Es liegt ein Schutz gegen Stöße von mindestens IK06 gemäß DIN EN 622622 vor. Damit sind die Bedienelemente 154 bis 156 im normalen Betrieb ausreichend geschützt, sodass eine Beschädigung der Bedienelemente im Betrieb auch bei normalen Stößen oder dergleichen nicht erfolgt. Außerdem sorgen die robusten Bedienelemente 154 bis 156 für eine zuverlässige Bedienung auch bei Downhillfahrten oder dergleichen.

Die Einstelleinrichtung 152 hingegen, die beispielsweise am Lenker angeklipst wird oder die in der Tasche oder in einem Rucksack des Benutzers verbleibt, bietet erheblich mehr und/oder übersichtlichere Einstellmöglichkeiten und kann dazu eingesetzt werden, eine angezeigte Dämpferkennlinie 10 in wenigstens zwei oder mehr Bereichen 161, 162 etc. zu verändern, um die gewünschten Dämpfereigenschaften einzustellen. Die Einstelleinrichtung 150 weist ein Display bzw. eine Anzeige 49 auf und kann auch Daten 48 ausgeben, die beispielsweise die Dämpfereinstellungen betreffen oder aber Daten über die aktuelle Fahrgeschwindigkeit etc. enthalten. Neben oder anstelle der Veränderung der Dämpfung kann über die Einstelleinrichtungen 150 und 152 auch wenigstens eine Federeigenschaft oder die Charakteristik der Federung verändert werden. Dabei kann insbesondere die Federhärte beim Ein- und oder Ausfedern beeinflusst werden. Außerdem kann gegebenenfalls die Ruhelage eingestellt werden. Beispielsweise kann ein Absenken der Federgabel 114 bei (steilen) Bergfahrten vorgenommen werden, wodurch der Neigungswinkel des Fahrrads 200 verringert wird.

Das Display 49 ist insbesondere als grafische Bedieneinheit oder Touchscreen 57 ausgeführt, sodass der Benutzer beispielsweise eine dargestellte Dämpferkennlinie 10 mit den Fingern berühren und durch Ziehen ändern kann. Dadurch kann aus der durchgezogen dargestellten Dämpferkennlinie 10 die auch dargestellte Dämpferkennlinie 50 erzeugt werden, die dann ab sofort für die Fahrzeugsteuerung 300 eingesetzt wird. Die Veränderung der Dämpferkennlinien 10, 50 ist auch während der Fahrt möglich. Hier wird nicht nur die Dämpfung verändert, sondern es kann auch gleichzeitig oder aber auch nur die Federung verändert werden.

Die Einstelleinrichtung 152 kann auch als Fahrradcomputer dienen und Informationen über die aktuelle Geschwindigkeit, sowie über die Durchschnittsgeschwindigkeit und/oder die Tages-, Tour, Runden- und Gesamtkilometer anzeigen. Möglich sind auch die Anzeige der aktuellen Position, der momentanen Höhe der gefahrenen Strecke sowie des Streckenprofils und auch eine mögliche Reichweite unter den aktuellen Dämpfungsbedingungen.

Figur 2 zeigt eine schematische Darstellung der Fahrwerksteuerung 300 und der Kommunikationsverbindungen einiger beteiligter Komponenten. Die zentrale Steuereinrichtung 60 kann drahtgebunden oder drahtlos mit den einzelnen Komponenten verbunden sein. Beispielsweise kann die Steuereinrichtung 60 (bzw. 46) über WLAN, Bluetooth, ANT+, GPRS, UMTS, LTE oder sonstige Übertragungsstandards mit den anderen Komponenten verbunden sein. Gegebenenfalls kann die Steuereinrichtung 60 über die gepunktet dargestellte Verbindung mit dem Internet 53 drahtlos verbunden sein.

Die Steuereinrichtungen 46 und 60 sind mit wenigstens einer Sensoreinrichtung 20 oder mit mehreren Sensoren verbunden. Wenigstens zeitweise sind die Bedieneinrichtungen 150, nämlich die Betätigungseinrichtung 151 und die Einstelleinrichtung 152 drahtgebunden oder drahtlos mit der Steuereinrichtung 60 gekoppelt. Die Betätigungseinrichtung 151 ist vorzugsweise drahtlos oder drahtgebunden an die Steuereinrichtung gekoppelt und kann über eine separate Batterie (z. B. Knopfzelle) verfügen.

Die robust aufgebaute Betätigungseinrichtung 151 verfügt über wenigstens eine mechanische Eingabeeinheit 153 in Form eines Schalters oder Tasters oder dergleichen, um darüber einen Umstellbefehl an die Steuereinrichtung 60 zur Umschaltung wenigstens einer Dämpfer- und/oder Federeigenschaft auszugeben. Das kann beispielsweise die Aktivierung eines Lockouts oder die Aktivierung einer Wippunterdrückung oder die Verstellung der Dämpferhärte und/oder der Federhärte sein. Vorzugsweise ist für jede dieser Eigenschaften ein separater Bedienknopf oder dergleichen vorgesehen. Es ist aber auch möglich, dass eine einzelne mechanische Eingabeeinheit 153 zum Umschalten der einzelnen Möglichkeiten verwendet wird. Die mechanische Eingabeeinheit 153 oder eine andere mechanische Eingabeeinheit kann zur Veränderung der Federungseigenschaften dienen. Beispielsweise kann die Federgabel abgesenkt und der Hinterraddämpfer entsprechend angepasst werden.

Die Einstelleinrichtung 152 verfügt hier über eine grafische Bedieneinheit wie einen berührungsempfindlichen Bildschirm und kann unter anderen auf dem Display 49 die aktuelle Dämpferkennlinie 10 darstellen.

Die Steuereinrichtung 60 ist über Netzwerkschnittstellen 54 oder Funknetzschnittstellen 55 mit Steuereinrichtungen 46 der Stoßdämpfer 100 am Vorderrad und am Hinterrad verbunden. Die möglicherweise an jedem Stoßdämpfer 100 vorgesehene Steuereinrichtung 46 sorgt für die lokale Steuerung und kann jeweils eine Batterie aufweisen oder aber mit der zentralen Batterieeinheit 61 verbunden sein. Bevorzugt ist es, dass die Steuerung beider Stoßdämpfer über die Steuereinrichtung 60 erfolgt. Möglich ist auch eine lokale Steuerung der Stoßdämpfer 100 über zugeordnete Steuereinrichtung 46.

Vorzugsweise ist jedem Stoßdämpfer 100 wenigstens eine Sensoreinrichtung 20 zugeordnet, um Relativbewegungen zwischen den Komponenten bzw. Anschlusseinheiten 101 und 102 zu erfassen. Insbesondere ist eine Relativposition der Komponenten 101 und 102 relativ zueinander bestimmbar. Die Sensoreinrichtung 20 ist vorzugsweise als (relativer) Wegsensor ausgebildet oder umfasst wenigstens einen solchen. Möglich und bevorzugt ist auch der Einsatz wenigstens eines zusätzlichen Beschleunigungssensors 47. Die Sensoreinrichtung 20 kann auch vorzugsweise als Geschwindigkeitssensor ausgebildet sein oder einen solchen umfassen.

Anhand der in der Speichereinrichtung 45 abgelegten Dämpferkennlinie 10 des Stoßdämpfers 100 werden nach Ermittlung eines Kennwerts für die Relativgeschwindigkeit die zugehörige Dämpfungskraft und eine passende Federkraft eingestellt. Eine passende Federkraft kann über das Gewicht des Fahrers ermittelt werden. Beispielsweise kann durch automatische Ermittlung der Einfeder-Position (sag) nach dem Aufsetzen eines Fahrers das Gewicht des Fahrers abgeleitet werden. Aus dem Einfederungsweg beim Aufsetzen des Fahrers auf das Fahrrad kann auf einen geeigneten Luftdruck in der Fluidfeder bzw. Gasfeder geschlossen werden, der dann automatisch sofort oder im Laufe des Betriebs eingestellt oder angenähert wird.

Es ist weiterhin eine Erkennungseinrichtung 408 vorgesehen, welche hier in die zentrale Steuereinrichtung 60 integriert ist und zur Erkennung von Unwegsamkeiten dient. Die Erkennungseinrichtung 408 kann aber auch separat ausgebildet und an einem beliebigen geeigneten Ort am Fahrrad 200 untergebracht sein. Der Erkennungseinrichtung 408 ist eine Sensoreinheit 403 zugeordnet, welche einen an der Federgabel 114 angebrachten Ultraschallsensor 424 umfasst. Die Sensoreinheit 403 ist hier über eine nicht gezeigte Leitung oder drahtlos mit der Erkennungseinrichtung 408 verbunden. Im Betrieb sendet die Sensoreinheit 403 ein Ultraschallsignal aus und empfängt dessen Reflektion. Die Erkennungseinrichtung 408 wertet das empfangene Signal aus und erkennt so, ob es sich bei der Quelle der Reflektion um eine Unwegsamkeit im Gelände handelt. Dabei wird das reflektierte Signal insbesondere auch von der Erkennungseinrichtung 408 derart ausgewertet, dass eine Charakterisierung der Unwegsamkeit möglich ist. Als Folge einer erkannten bzw. charakterisierten Unwegsamkeit liefert die Erkennungseinrichtung 408 ein entsprechendes Steuersignal an die zentrale Steuereinrichtung 60. Möglich ist auch eine Bildauswertung der Bilder einer Kamera.

Als Reaktion auf eine erkannte Unwegsamkeit steuert die Erkennungseinrichtung 408 in Verbindung mit der zentralen Steuereinheit 60 die als Hinterraddämpfer 115 ausgebildete zweite Dämpfereinrichtung zeitversetzt zu der Federgabel 114 an. Der Zeitversatz zwischen der Ansteuerung der Federgabel 114 und dem Hinterraddämpfer 115 wird von der Erkennungseinrichtung 408 ebenfalls in Verbindung mit der Steuereinrichtung 60 in Abhängigkeit der Fahrgeschwindigkeit bestimmt. Zur Bestimmung der Fahrgeschwindigkeit sind entsprechende Sensoren an wenigstens einem der Räder 111, 112 angeordnet und mit der zentralen Steuereinrichtung 60 wirkverbunden. Die Bestimmung der Fahrgeschwindigkeit kann auch über ein GPS-Signal erfolgen

In Figur 2 ist der Steuerkreislauf 12 schematisch dargestellt, der in der Speichereinrichtung 45 abgelegt ist und in der Steuereinrichtung 46 oder 60 hinterlegt oder einprogrammiert ist. Der Steuerkreislauf 12 wird im Betrieb periodisch und insbesondere kontinuierlich periodisch durchgeführt. Im Schritt 52 wird mit der Sensoreinrichtung 20 eine aktuelle Relativbewegung bzw. Relativgeschwindigkeit der ersten Komponente bzw. Anschlusseinheit 101 zur zweiten Komponente bzw. Anschlusseinheit 102 erfasst. Aus den Werten der Sensoreinrichtung 20 oder wird im Schritt 52 ein Kennwert abgeleitet, der repräsentativ für die aktuelle Relativgeschwindigkeit ist. Vorzugsweise wird als Kennwert eine Relativgeschwindigkeit verwendet.

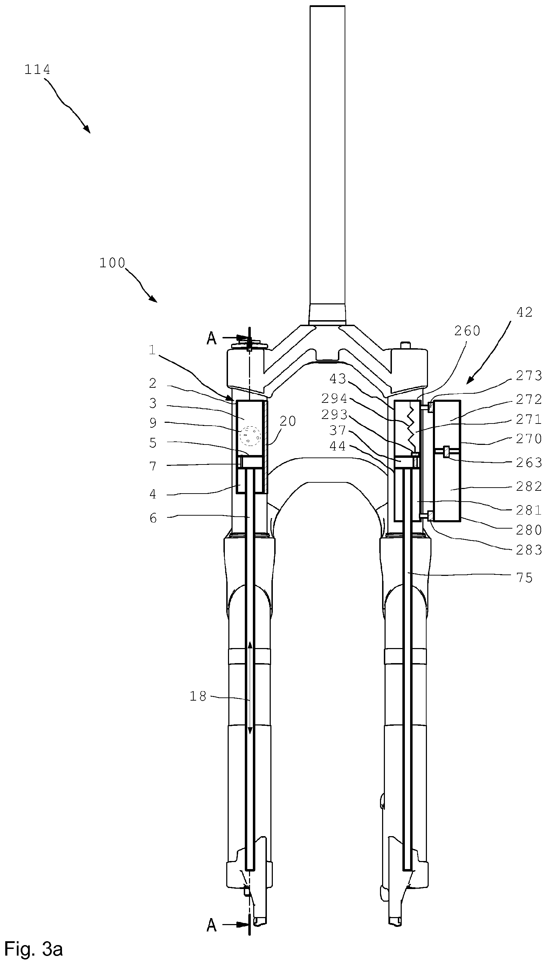

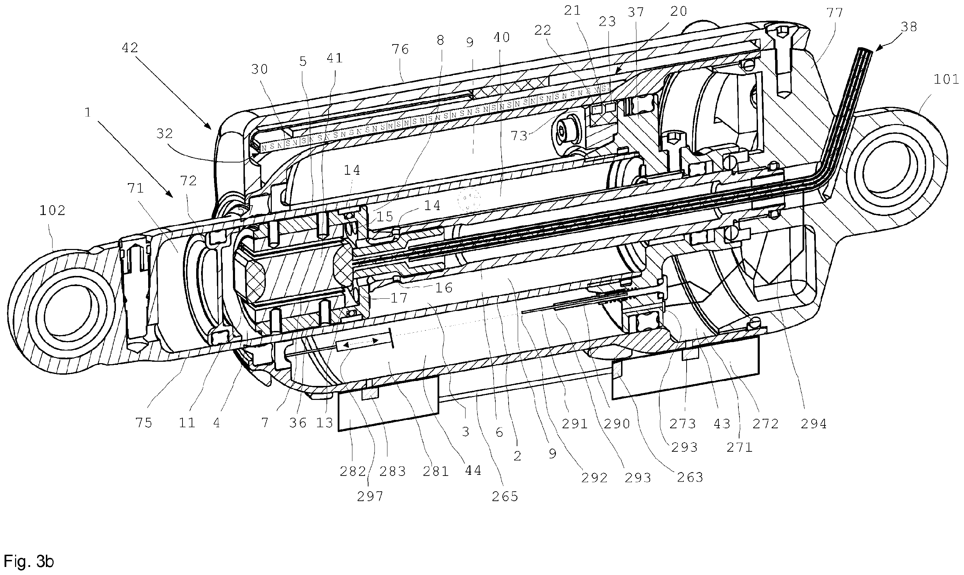

Die Dämpfereinrichtung (vgl. Fig. 3a oder 3b) des Stoßdämpfers 100 weist eine Dämpfereinrichtung 1 mit einer ersten und einer zweiten Dämpferkammer auf, zwischen denen ein Dämpfungsventil angeordnet ist. Das Dämpfungsventil weist wenigstens einen Dämpfungskanal 7 auf, der einem Magnetfeld einer elektrischen Spuleneinrichtung ausgesetzt wird, um das magnetorheologische Medium bzw. Fluid (MRF) in dem Dämpfungskanal 7 zu beeinflussen und so die gewünschte Dämpfungskraft einzustellen. Bei der Einstellung der Dämpfungskraft kann eine Dämpferkennlinie berücksichtigt werden.

Im Schritt 56 wird dann anschließend aus den aktuellen Messwerten unter Berücksichtigung der vorbestimmten oder ausgewählten Dämpferkennlinie die zugehörige einzustellende Dämpfungskraft abgeleitet. Daraus wird ein Maß für die aktuell einzustellende Feldstärke bzw. Stromstärke abgeleitet, mit welcher die einzustellende Dämpfungskraft wenigstens näherungsweise erreicht wird. Das Maß kann die Feldstärke selbst sein oder aber z. B. die Stromstärke angeben, mit welcher die einzustellende Dämpfungskraft wenigstens etwa erreicht wird.

Im darauf folgenden Schritt 70 wird die aktuell einzustellende Feldstärke erzeugt oder die entsprechende Stromstärke an die elektrische Spuleneinrichtung 11 als Felderzeugungseinrichtung angelegt, sodass innerhalb eines einzelnen Zyklus bzw. einer Zeitperiode des Steuerkreislaufes 12 die Dämpfungskraft erzeugt wird, die bei der gewählten oder vorbestimmten Dämpferkennlinie zu der aktuellen Relativgeschwindigkeit der ersten Anschlusseinheit 101 zu der zweiten Anschlusseinheit 102 vorgesehen ist. Anschließend startet der nächste Zyklus und es wird wieder Schritt 52 durchgeführt. In jedem Zyklus oder in bestimmten zeitlichen Abständen oder bei bestimmten Ereignissen wird die Position oder die Federkraft der Federeinrichtung 42 überprüft.

Dazu werden bei der Fluidfeder 260 (vgl. Fig. 3a oder 3b) die Stärke der Federkraft der Positivkammer 270 und die Stärke der Federkraft der Negativkammer 280 überprüft oder ermittelt. Wird eine härtere Fluidfeder 261 gewünscht, kann beispielsweise die zweite Positivkammer 272 abgeschaltet werden, sodass die Fluidfeder 260 einen steileren Verlauf der Federkraft erhält. Oder es wird das Volumen der Negativkammer 280 verändert oder es wird eine Position 292 der Ausgleichseinrichtung 290 verändert.

Die hier gezeigte zentrale Steuereinrichtung 60 ist zudem mit der erfindungsgemäßen Federgabel oder dem Lenker wirkverbunden. Die Fahrradkomponente 401 besteht aus der Erkennungseinrichtung 408 und einem Ultraschallsensor 424. Der Ultraschallsensor 424 kann hier ein Ultraschallsignal aussenden und dieses Signal auch wieder empfangen. Der Sensor 424 vereint somit eine Sendeeinheit 413 und eine Empfangseinheit 423 in einem Bauteil. Dadurch ist eine besonders unauffällige und platzsparende Unterbringung möglich. Das ist besonders bei Sportfahrrädern von Vorteil, bei denen erhöhter Wert auf ein geringes Gewicht und gute aerodynamische Eigenschaften gelegt wird. Zudem wird auch das äußere Erscheinungsbild des Fahrrads 200 nicht beeinträchtigt.

Alternativ kann die Erkennungseinrichtung 408 auch mit einem Infrarotsensor 434 verbunden sein. Es kann auch ein Radarsensor 444 vorgesehen sein. Die Erkennungseinrichtung 408 weist hier auch eine integrierte Speichereinrichtung 418 auf. Damit ist eine Hinterlegung der erkannten Unwegsamkeiten sowie der daraufhin vorgenommenen Dämpfereinstellungen möglich. Diese können dann später z. B. von einem Benutzer über eine entsprechende Schnittstelle wie z. B. ein Smartphone 160 abgerufen werden. Des Weiteren greift die Erkennungseinrichtung 408 hier auf Daten einer Sensoreinrichtung 20 zurück. Die Erkennungseinrichtung 408 berücksichtigt dabei die erfassten Werte der Sensoreinrichtung 20, um die Dämpferauslastung überwachen zu können.

Fig. 3a zeigt in einer stark schematischen Ansicht eine Federgabel 114, die für das Vorderrad 111 Anwendung findet und Fig. 3b zeigt den Hinterraddämpfer 115, die im Folgenden gemeinsam beschrieben werden.

Die Federgabel 114 weist einen Stoßdämpfer 100 auf. Der Stoßdämpfer 100 umfasst eine Dämpfereinrichtung 1 in einem Bein der Federgabel und eine Federeinrichtung 42 in dem anderen Bein der Federgabel. In anderen Ausgestaltungen können die Dämpfereinrichtung 1 und die Federeinrichtung 42 auch in einem Bein gemeinsam angeordnet sein.

Der Stoßdämpfer 100 wird mit dem ersten Ende als Anschlusseinheit 101 und dem zweiten Ende als Anschlusseinheit 102 an unterschiedlichen Teilen der Trageinrichtung 120 bzw. des Rahmens 113 befestigt, um Relativbewegungen zu federn und zu dämpfen.

Die Dämpfereinrichtung 1 umfasst eine erste Dämpferkammer 3 und eine zweite Dämpferkammer 4 in einem gemeinsamen Dämpfergehäuse 2. Die beiden Dämpferkammer 3 und 4 sind voneinander durch den Dämpferkolben bzw. Dämpfungskolben 5 getrennt, in oder an dem ein magnetorheologisches Dämpfungsventil 8 einen Dämpfungskanal 7 aufweist, durch den das magnetorheologische Dämpfungsfluid 9 (MRF) strömt. Während das Dämpfergehäuse 2 an dem oberen Teil der Federgabel 114 und somit dem Rahmen 113 befestigt ist, ist der Dämpferkolben 5 über die Kolbenstange 6 mit dem unteren Ausfallende verbunden.

In dem anderen Federbein der Federgabel ist hier die Federeinrichtung 42 angeordnet, die hier eine als Fluidfeder ausgebildete Federeinheit 260 umfasst. Die Federeinrichtung weist ein Gehäuse auf, in welchem der Federungskolben 37 eine Positivkammer 270 von einer Negativkammer 280 trennt. Die Positivkammer 270 bildet eine Positivfeder und die Negativkammer 280 bildet eine Negativfeder, deren Federkraft in der Ruheposition meist geringer ist, aber bei der die Federkraft der der Positivfeder entgegengesetzt ist. Dadurch wird ein gutes Ansprechverhalten erreicht, da auch bei kleinen Stößen die Fluidfeder reagiert. Die Fluidfeder ist mit einem Fluid und hier mit Gas und vorzugsweise Luft gefüllt.

Die Positivfeder umfasst hier zwei Teilkammern 271 und 272, die durch ein Steuerventil 273 voneinander bedarfsweise getrennt oder miteinander verbunden werden können.

Die Negativfeder umfasst hier zwei Teilkammern 281 und 282, die durch ein Steuerventil 283 voneinander bedarfsweise getrennt oder miteinander verbunden werden können.

Die Teilkammer 272 der Positivkammer 270 und die Teilkammer 282 der Negativkammer 280 können über das Steuerventil 263 miteinander verbunden werden. Dadurch wird es mit den Steuerventilen 263, 273 und 283 möglich, an jeder beliebigen Federposition einen Druckausgleich zwischen der Positivkammer und der Negativkammer vorzunehmen, wodurch die jeweilige Charakteristik der Fluidfeder geändert wird. Die Steuerventile 263, 273 und 283 dienen dabei als Aktoren, welche durch die Steuereinrichtung 60 gesteuert betätigt werden. Dadurch kann die Ruhelage frei eingestellt werden und auch ein Absenken einer Federgabel beispielsweise bei Bergfahrten erreicht werden. Bei einem Hinterradstoßdämpfer kann ein gegebenenfalls vorhandenes Zusatzvolumen in einer Teilkammer weggeschaltet werden und somit die Federung am Hinterrad für eine Bergauffahrt härter eingestellt werden. Es ist möglich, dass nur eines der Steuerventile 263, 273 und 283 vorgesehen ist. Beispielsweise kann nur das Steuerventil 273 (oder 283) vorgesehen sein, sodass durch Öffnen bzw. Schließen des Steuerventils 273 (bzw. 283) das Volumen der Positivkammer 270 (Negativkammer 280) und somit die Federcharakteristik der Federeinheit 260 verändert wird.

Es ist auch möglich, dass die Federgabel 114 nur ein Steuerventil 293 im Federungskolben 37 aufweist, welches über ein Kabel bzw. eine Steuerleitung 294 mit der Steuereinrichtung 60 verbunden ist. Durch das Öffnen des Steuerventils 293 kann ein Gastaustausch an jeder beliebigen axialen Position des Federungskolbens 37 ermöglicht werden. Ein Druckausgleich an einer geeigneten Stelle verändert die Ruhelage und führt z. B. zu einem Absenken oder zu einer Überführung in die Normallage, wenn die Federgabel abgesenkt war.

Durch geeignete Steuerung der Steuerventile kann auch das Druckniveau in der Positiv- und/oder Negativkammer beeinflusst werden.

Fig. 3b zeigt in einer stark schematischen Ansicht einen Querschnitt eines Stoßdämpfer 100, der hier beispielsweise in dem Hinterraddämpfer 115 Anwendung findet.

Der Stoßdämpfer 100 umfasst eine Dämpfereinrichtung 1. Der Stoßdämpfer 100 wird mit dem ersten Ende als Komponente 101 und dem zweiten Ende als Komponente 102 an unterschiedlichen Teilen der Trageinrichtung 120 bzw. des Rahmens 113 befestigt, um Relativbewegungen zu dämpfen.

In dem Dämpfergehäuse 2 ist eine Dämpfungskolbeneinheit 40 vorgesehen, die einen Dämpfungskolben 5 mit einem Dämpfungsventil 8 und eine damit verbundene Kolbenstange 6 umfasst. In dem Dämpfungskolben 5 ist das magnetorheologische Dämpfungsventil 8 vorgesehen, welches hier eine Felderzeugungseinrichtung 26 und insbesondere eine elektrische Spule 11 umfasst, um eine entsprechende Feldstärke zu erzeugen. Die Magnetfeldlinien verlaufen dabei in dem Zentralbereich des Kerns 41 etwa senkrecht zur Längserstreckung der Kolbenstange 6 und durchtreten somit etwa senkrecht die Dämpfungskanäle 7 Dadurch wird eine effektive Beeinflussung des sich in den Dämpfungskanälen 7 befindenden magnetorheologischen Fluides bewirkt, sodass der Durchfluss durch das Dämpfungsventil 8 effektiv gedämpft werden kann. Der Stoßdämpfer 100 umfasst eine erste Dämpferkammer 3 und eine zweite Dämpferkammer 4, die durch das als Kolben 5 ausgebildete Dämpfungsventil 8 voneinander getrennt sind. In anderen Ausgestaltungen ist auch ein externes Dämpferventil 8 möglich, welches außerhalb des Dämpfergehäuses 2 angeordnet und über entsprechende Zuleitungen angeschlossen ist.

Zu dem Ende 102 hin schließt sich an die erste Dämpferkammer 4 der Ausgleichskolben 72 und danach der Ausgleichsraum 71 an. Der Ausgleichsraum 71 ist vorzugsweise mit einem Gas gefüllt und dient zum Ausgleich des Kolbenstangenvolumens, welches beim Einfedern in das ganze Dämpfergehäuse 2 eintritt.

Nicht nur in dem Dämpfungsventil 8, sondern hier in den beiden Dämpfungskammern 3 und 4 insgesamt befindet sich hier ein magnetorheologisches Fluid 9 als feldempfindliches Medium.

Der Strömungskanal 7 zwischen der ersten Dämpferkammer 3 und der zweiten Dämpferkammer 4 erstreckt sich ausgehend von der zweiten Dämpferkammer 4 zunächst durch die fächerartigen Dämpfungskanäle 7, die am anderen Ende in den Sammelraum 13 bzw. in die Sammelräume 13 münden. Dort sammelt sich nach dem Austritt aus den Dämpfungskanälen 7 das magnetorheologische Fluid, bevor es durch die Strömungsöffnungen 14, 15 in die erste Dämpfungskammer 3 übertritt. Beim Einfedern, also in der Druckstufe, werden hier sämtliche Strömungsöffnungen 14, 15 durchströmt. Das bedeutet, das der Hauptteil der Strömung hier durch die Strömungsöffnungen 15 durchtritt und die Einwegventile 17 an den Strömungsöffnungen 15 automatisch öffnen, sodass das magnetorheologische Fluid aus der zweiten Dämpferkammer 4 in die erste Dämpferkammer 3 übertreten kann.

Im dargestellten eingefederten Zustand ist die erste Dämpferkammer 3 vollständig radial von der zweiten Federkammer 44 der Federeinrichtung 42 umgeben. Dadurch wird ein besonders kompakter Aufbau ermöglicht.

Der Stoßdämpfer 100 kann eine Ausgleichseinrichtung 290 umfassen, welche einen Druckausgleich zwischen der Positivkammer 270 und der Negativkammer 280 ermöglicht. Die Position des Druckausgleichs kann einstellbar sein. Dazu kann die Ausgleichseinrichtung 290 z. B. einen teleskopierbaren Ausgleichsstößel 291 aufweisen, der mehr oder weniger aus dem Federungskolben 37 ausfahrbar ist. Dadurch erreicht der ausfahrbare Ausgleichsstößel 291 früher (oder später) einen Anschlag am Ende der Negativkammer 280. Die Ausgleichseinrichtung 290 kann über ein elektrisches Kabel 294 mit der Steuerungseinrichtung 46 oder 60 verbunden sein. Wenn der Ausgleichsstößel 291 anstößt, öffnet er eine Fluidöffnung daran, sodass ein Gasausgleich und somit ein Druckausgleich zwischen der Positivkammer 270 und der Negativkammer 280 erfolgt.

Beim Ausfedern schließt die Ausgleichseinrichtung 290 wieder automatisch. Je nach Position des Ausgleichs werden unterschiedliche Druckverhältnisse an der Fluidfeder eingestellt, die das Fahrwerk entsprechend beeinflussen. Möglich ist es auch, dass am Ende der Negativkammer 280 ein verstellbarer oder verfahrbarer Anschlag für einen feststehenden Ausgleichsstößel 291 vorgesehen ist, um eine Variation der Federcharakteristik zu erzielen. Alternativ oder zusätzlich dazu kann ein längenverstellbarer Anschlag 297 vorgesehen sein, gegen den der Ausgleichsstößel 291 an einer einstellbaren und veränderbaren Position 292 anschlägt. Wenn der Ausgleichsstößel 291 anschlägt, öffnet der Ausgleichsstößel 291 das Steuerventil 293 bzw. bildet eine Strömungsöffnung, durch welche ein Druckausgleich zwischen Positiv- und Negativkammer erfolgen kann. Fig. 3b zeigt eine Stellung 292 mit ausgefahrenem Ausgleichsstößel 291. Der Ausgleichsstößel 291 kann auch eingefahren werden, sodass sich eine andere Position ergibt, bei der die Ausgleichseinrichtung 290 öffnet. Der Ausgleichsstößel 291 ist vorzugsweise mit einer Feder beaufschlagt.

Weiterhin kann auch ein elektrisch steuerbares und z. B. über das elektrische Kabel 294 mit Energie versorgtes Ausgleichsventil 293 vorgesehen sein, um an geeigneten Positionen einen teilweisen oder vollständigen Druckausgleich zwischen der Positivkammer 270 und der Negativkammer 280 durchzuführen.

Weiterhin kann die Positivkammer 270 aus mehreren Teilkammern 271, 272 bestehen. Zu der Grundkammer als Teilkammer 271 kann bei Bedarf oder auf Wunsch die Teilkammer 272 zugeschaltet werden, um die Federhärte zu verändern und insbesondere zu verringern. Umgekehrt kann auch die Teilkammer 272 abgeschaltet und von der Teilkammer 271 getrennt werden, wenn die Federhärte verändert und insbesondere erhöht werden soll.

Analog dazu kann kann die Negativkammer 280 aus mehreren Teilkammern 281, 282 bestehen. Zu der ersten Teilkammer 281 kann bei Bedarf oder auf Wunsch die zweite Teilkammer 282 zugeschaltet werden. Entsprechend kann auch die Teilkammer 282 abgeschaltet und von der Teilkammer 281 getrennt werden. In einer weiteren Ausgestaltung umfasst die Positivkammer 270 Teilkammern 271 und 272 und die Negativkammer 280 Teilkammern 281 und 282. Die Ausgleichseinrichtung 290 umfasst in dieser Ausgestaltung Steuerventile 273, 283 und 263 und eine Verbindungsleitung 265, welche die Teilkammern 272 und 282 bedarfsweise miteinander verbindet. Werden die drei Steuerventile 273, 283 und 263 geöffnet, so findet ein Druckausgleich zwischen der Positivkammer 270 und der Negativkammer 280 statt. Die Position 292 des Druckausgleichs ist dabei beliebig wählbar und unabhängig von einem Ausgleichsstößel 291. Deshalb muss bei einer solchen Ausgestaltung weder ein Ausgleichsstößel 291, noch ein Steuerventil 293 im Kolben 37, noch ein einstellbarer Anschlag 297 vorgesehen sein. Der Federungskolben 37 ist am Ende des Dämpfergehäuses 2 vorgesehen.

Die Zu- und Abschaltung der Teilkammern kann in allen Fällen auch positionsabhängig beim Ein- oder Ausfedern erfolgen.

Sowohl der Stoßdämpfer der Federgabel 114 als auch der Stoßdämpfer für das Hinterrad weist hier jeweils eine Sensoreinrichtung 20 auf. Die Sensoreinrichtung 20 umfasst jeweils einen Detektorkopf 21 und eine strukturiert ausgebildete Maßstabeinrichtung 30.

Die Maßstabeinrichtung 30 umfasst hier ein Sensorband mit Permanentmagneteinheiten als Felderzeugungseinheit. Die Pole der Permanentmagneteinheiten wechseln sich alternierend ab, sodass entlang der Bewegungsrichtung des Detektors 22 alternierend Nord-Südpole angeordnet sind. Die magnetische Feldstärke wird durch den Detektorkopf ausgewertet und daraus die Position 19 ermittelt. Der Aufbau und die Funktion der Sensoreinrichtung 20 werden später noch detaillierter erläutert.

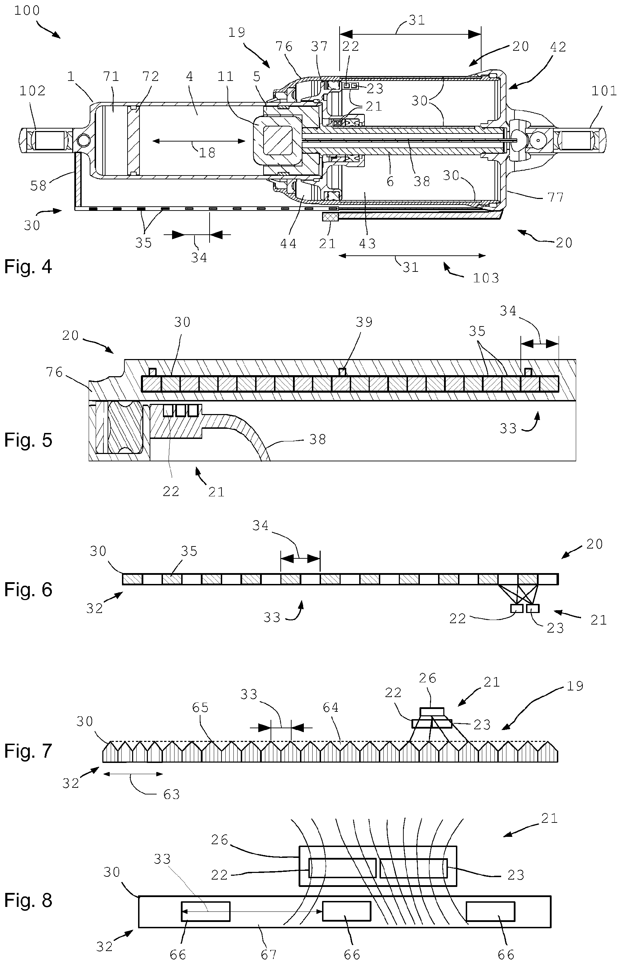

In Figur 4 ist ein weiteres Ausführungsbeispiel eines Stoßdämpfers 100 abgebildet, wobei zur besseren Verdeutlichung verschiedene Varianten einer Sensoreinrichtung 20 eingezeichnet sind, von denen in der Regel nur eine eingebaut ist.

Der Stoßdämpfer 100 erstreckt sich hier zwischen den an den Enden vorgesehenen Anschlusseinheiten 101 und 102 und umfasst eine Dämpfereinrichtung 1 und eine Federeinrichtung 42, die als Luftfeder ausgeführt ist und eine Positivkammer 43 und eine Negativkammer 44 umfasst. Die Dämpfereinrichtung 1 umfasst eine erste Dämpferkammer 3 und eine zweite Dämpferkammer 4, die durch einen Dämpfungskolben 5 voneinander getrennt sind. In dem Dämpfungskolben 5 ist ein bzw. wenigstens ein Dämpfungsventil 8 vorgesehen (in Figur 4 außerhalb der Schnittebene und deshalb nicht sichtbar). Das Dämpfungsventil 8 bzw. der "Öffnungszustand" des Dämpfungsventils wird über eine elektrische Spuleneinrichtung 11 angesteuert. Die Spule der elektrischen Spuleneinrichtung 11 ist nicht in Umfangsrichtung um die Kolbenstange 6 herumgewickelt, sondern um eine Achse, die sich quer zur Längserstreckung der Kolbenstange 6 erstreckt. Eine Relativbewegung findet hier linear statt und erfolgt in der Bewegungsrichtung 18.

In dem Dämpfergehäuse 2 ist ein Ausgleichskolben 72 angeordnet, der einen insbesondere mit Gas gefüllten Ausgleichsraum 71 für das Volumen der Kolbenstange abtrennt.

Die Federeinrichtung 42 erstreckt sich wenigstens teilweise um die Dämpfereinrichtung 1 herum und umfasst ein Federgehäuse 76. Ein Ende der Dämpfereinrichtung 1 ist mit einem Federungskolben 7 30 verbunden bzw. bildet einen solchen. Der Federungskolben 7 trennt die Positivkammer 43 von einer Negativkammer 44.

Das Federgehäuse 76 wird zu dem Ende der Anschlusseinheit 101 durch einen Deckel 77 abgeschlossen. Dort wird auch das Anschlusskabel 38 für die elektrische Spuleneinrichtung 11 herausgeführt. Vorzugsweise wird dort auch ein elektrisches Anschlusskabel für die Sensoreinrichtung 20 nach außen herausgeführt.

Die Sensoreinrichtung 20 umfasst zwei Sensorteile, nämlich den Detektorkopf 21, der in der oberhalb der Mittellinie dargestellten Variante innerhalb der Positivkammer 43 der Federeinrichtung 42 angeordnet ist. Die Sensoreinrichtung 20 umfasst als weiteres Sensorteil die Maßstabeinrichtung 30, die in verschiedenen Varianten an dem Federgehäuse 76 angeordnet oder aufgenommen ist. Je nach Ausgestaltung und Materialwahl des Federgehäuses 76 und nach Messprinzip der Sensoreinrichtung 20 kann die Maßstabeinrichtung 30 in die innere oder die äußere Wandung oder mitten in die Wandung des Federgehäuses 76 integriert sein. Die Maßstabeinrichtung 30 wird bevorzugt auf der Innenwandung des Federgehäuses 76 angeordnet, kann aber auch außen auf dem Federgehäuse 76 angebracht oder aufgebracht sein.

Dargestellt sind vier Varianten. In einer ersten Variante ist die Maßstabeinrichtung 30 auf der Außenseite des Federgehäuses 76 angebracht und insbesondere in eine Nut auf der Außenseite des Federgehäuses 76 eingelassen. Der Detektorkopf 21 befindet sich radial relativ weit außen in der Positivkammer 43 der Federeinrichtung 42.

In einer zweiten dargestellten Variante ist die Maßstabeinrichtung 30 auf der Innenseite des Federgehäuses 76 in z. B. einer Nut auf der Innenseite des Federgehäuses 76 oder direkt in die Wandung des Federgehäuses 76 eingelassen. Der Detektorkopf 21 befindet sich ebenfalls innerhalb der Positivkammer 43 der Federeinrichtung 42 radial weit außen.

In einer dritten dargestellten Variante ist die Maßstabeinrichtung 30 in die Kolbenstange des Federungskolbens integriert. Der Detektorkopf 21 befindet sich ebenfalls innerhalb der Positivkammer 43 der Federeinrichtung 42, aber in dieser Variante vorzugsweise radial weiter innen.

In der vierten dargestellten Variante befinden sich Maßstabeinrichtung 30 und Detektorkopf 21 radial außerhalb des Federgehäuses 76.

Der Detektorkopf 21 umfasst in jedem Fall vorzugsweise (wenigstens) zwei Detektoren 22 und 23, die hier in Bewegungsrichtung 18 versetzt zueinander angeordnet sind. Die Maßstabeinrichtung 30 weist in jedem Fall eine sich über eine Messstrecke 31 erstreckende Struktur 32 auf, über der sich die physikalischen Eigenschaften der Maßstabeinrichtung 30 periodisch ändern. Vorzugsweise sind auf der Maßstabeinrichtung 30 Sensorabschnitte 33 (vergleiche Figuren 5 bis 8) angeordnet, die sich jeweils wiederholende elektrische und/oder magnetische Eigenschaften haben und somit die Struktur 32 der Maßstabeinrichtung 30 bilden.

Dabei kann, wie schon in Figur 3b dargestellt, die Maßstabeinrichtung 30 eine Vielzahl von Permanentmagneten aufweisen, deren Pole alternierend angeordnet sind, sodass sich ein Nordpol und ein Südpol alternierend abwechseln.

In einer solchen Ausgestaltung ist der Detektorkopf 21 mit Detektoren 22 und 23 ausgerüstet, die ein Magnetfeld detektieren. Beispielsweise können die Detektoren 22 und 23 als elektrische Spulen ausgebildet sein oder beispielsweise als Hallsensoren ausgeführt sein, um die Intensität eines magnetischen Feldes zu erfassen.

Findet nun eine Relativbewegung der Anschlusseinheiten 101 und 102 des Stoßdämpfers 100 zueinander statt, so ändert sich die Position 19 des Stoßdämpfers 100 und es verschiebt sich die relative Position des Detektorkopfs 21 relativ zu der Maßstabeinrichtung 30. Durch Auswertung der Signalstärke eines Detektors 22, 23 und insbesondere von wenigstens zwei Detektoren 22, 23 kann somit auf die relative Position des Detektorkopfs 21 relativ zu einem Sensorabschnitt 33 bzw. gegenüber der Maßstabeinrichtung 30 oder der absoluten Position innerhalb eines Sensorabschnitts 33 zurückgeschlossen werden. Werden zwei Detektoren in Bewegungsrichtung 18 versetzt zueinander angeordnet und erfassen beide Detektoren das Magnetfeld der Maßstabeinrichtung 30, so kann durch Auswertung der Signale die Position 19 und die Bewegungsrichtung 18 sehr genau ermittelt werden.

Bei der kontinuierlichen Bewegung wird in der Speichereinrichtung 45 der Steuereinrichtung 46 die Anzahl der passierten Sensorabschnitte bzw. Perioden hinterlegt, sodass auf die absolute Position 19 zurückgeschlossen werden kann. Dazu ist nur erforderlich, dass die Messfrequenz derart hoch ist, dass nicht während eines Messzyklus ein vollständiger Sensorabschnitt "unbemerkt" vorbeigeschoben wird.

Bei der Variante, bei der die Sensoreinrichtung 20 vollständig außerhalb des Dämpfergehäuses 2 und des Federgehäuses 76 angeordnet ist, hält ein Halter 58 die Maßstabeinrichtung 30 und verbindet die Maßstabeinrichtung fest mit einem Ende bzw. einer Anschlusseinheit 102 des Stoßdämpfers 100. Mit dem anderen Ende bzw. der anderen Anschlusseinheit 101 des Stoßdämpfers 100 ist der Detektorkopf 21 verbunden. Der Detektorkopf 21 wird so gehalten, dass er berührungslos mit einem geringen Abstand von der Maßstabeinrichtung 30 angeordnet ist. Bei einer Relativbewegung der Anschlusseinheiten des Stoßdämpfers 100 erfolgt so auch eine Relativbewegung der Maßstabeinrichtung 30 relativ zu dem Detektorkopf 21. Auch hier kann über die Messstrecke 31, die vorzugsweise im Wesentlichen dem Dämpferhub 103 entspricht, über die Auswertung der Feldstärken eine Relativposition ermittelt werden.

Dadurch, dass die Intensität der Feldstärke ermittelt wird, kann die Auflösung der Sensoreinrichtung 20 erheblich gesteigert werden. Dabei ist es möglich, dass die Auflösung zur Bestimmung der Position 19 einen Faktor 50, 100, 500, 1000, 2000 oder mehr kleiner ist als eine Länge 34 eines Sensorabschnitts 33. Besonders bevorzugt werden Faktoren verwendet, die einer Potenz von 2 entsprechen, beispielsweise 128, 256, 512, 1024, 2048, 4096, 8192, 16384 oder mehr. Dies erleichtert die (digitale) Signalverarbeitung. Dadurch kann bei Verwendung einer Struktur 32 mit Sensorabschnitten 33 im Millimeterbereich eine Auflösung im Mikrometerbereich erreicht werden.

Die Sensoreinrichtung 20 umfasst an der Maßstabeinrichtung 30 Permanentmagneten als Felderzeugungseinheiten 35, so wie es in Figur 3b dargestellt ist. Möglich ist es aber auch, dass sich über der Länge der Struktur 32 auch noch andere physikalische und insbesondere magnetische und/oder elektrische Eigenschaften ändern.

Beispielsweise kann die Maßstabeinrichtung 30 wenigstens zum Teil aus einem ferromagnetischen Material gebildet sein, wobei die Maßstabeinrichtung 30 an dem ferromagnetischen Material beispielsweise in regelmäßigen oder vorbestimmten Abständen Zacken, Zähne, Vorsprünge, Nuten oder andere Strukturen aufweist, die zu einer Positionsbestimmung dienen können. Möglich ist es auch, dass die Maßstabeinrichtung zum Beispiel insgesamt aus einem Isolator 67 besteht, in welches Material in periodischen Abständen Leiter 66 eingebettet sind. Der Isolator 67 ist insbesondere ein Nicht-Leiter.

Verschiedene Messprinzipien der Sensoreinrichtung 20 werden im Folgenden mit Bezug auf die Figuren 5 bis 8 erläutert.

In Figur 5 ist eine Variante der Sensoreinrichtung 20 abgebildet, bei der die Struktur 30 Permanentmagnete als Felderzeugungseinheiten 35 aufweist. Dabei sind die Pole der Felderzeugungseinheiten 35 vorzugsweise alternierend angeordnet, sodass sich über der Messstrecke 31 der Maßstabeinrichtung 30 ein sich periodisch änderndes Magnetfeld ergibt.

In Figur 5 ist der Detektorkopf 21 im Inneren des Federgehäuses 76 angeordnet und die Maßstabeinrichtung 30 befindet sich integriert in das Federgehäuse 76. In bestimmten Abständen sind Positionsmarken 39 oder dergleichen vorgesehen, um bestimmte Kalibrierungsstellen zur Kalibrierung der absoluten Position zu zur Verfügung zu stellen oder aber über bestimmte Codierungen eine absolute Positionsbestimmung zu ermöglichen. Es können in allen Fällen auch separate Endlagensensoren vorgesehen sein.

Die Maßstabeinrichtung 30 kann aus einzelnen Permanentmagneten zusammengesetzt sein oder als einzelner Magnet mit abwechselnder Magnetisierung ausgeführt sein. Bevorzugt wird als Maßstabeinrichtung 30 ein Magnetband verwendet, beispielsweise aus kunststoffgebundenem magnetischem Material.

Die Maßstabeinrichtung 30 kann insbesondere Teil des Federgehäuses 76 oder eines anderen Teils der Dämpfereinrichtung 1 sein, wenn dieses zumindest zum Teil aus einem Material mit hartmagnetischen Eigenschaften besteht. In diesem Fall kann die relative, in bestimmten Ausführungen auch absolute, Positionsbestimmung durch lokal unterschiedliche Magnetisierung des Materials erfolgen.

Eine bevorzugte Ausführung sieht vor, die Maßstabeinrichtung 30 in Form einer hartmagnetischen Beschichtung auf das Federgehäuse 76 aufzubringen. Dabei sind Schichtstärken von weniger als 1 Millimeter oder weniger als 100 Mikrometer und insbesondere weniger als 10 Mikrometer erreichbar und reichen zur Positionsbestimmung aus.

Figur 6 zeigt eine Variante, bei der an der Maßstabeinrichtung 30 ebenfalls in regelmäßigen Abständen Permanentmagnete 35 angeordnet sind. Zwischen den Permanentmagneten 35 ist beispielsweise jeweils ein nicht-magnetisches Material vorgesehen. Auch dadurch ergibt sich eine sich periodisch ändernde Intensität des Magnetfeldes über der Messstrecke 31 der Maßstabeinrichtung 30. Stark schematisch eingezeichnet ist ein Detektorkopf 21 mit hier ebenfalls zwei Detektoren 22, 23, wobei der Erfassungswinkel für die beiden Detektoren eingezeichnet ist, um zu verdeutlichen, dass sich bei diesem in Bewegungsrichtung 18 versetzt angeordneten Detektoren 22, 23 unterschiedliche Intensitäten bei der Messung ergeben.

Figur 7 zeigt eine andere Ausgestaltung der Sensoreinrichtung 20, wobei die strukturierte Maßstabeinrichtung 30 beispielsweise ferromagnetisch ausgebildet ist und kein oder doch im Wesentlichen kein eigenes Magnetfeld bereitstellt. Hier ist die Außenform des ferromagnetischen Teils der Maßstabeinrichtung 30 mit einer regelmäßigen Struktur versehen, wobei in regelmäßigen und/oder vorbestimmten Abständen Spitzen 65 oder Zacken oder andere Vorsprünge oder Rücksprünge vorgesehen sind. Die Länge 34 eines Sensorabschnitts 33 ergibt sich hier aus dem Abstand zweier Spitzen 65 oder Zacken oder dergleichen. Um eine glatte Oberfläche zur Verfügung zu stellen, kann der Zwischenraum zwischen den Spitzen 65 mit einer Füllmasse 64 ausgefüllt sein.

Bei dieser Variante umfasst der Detektorkopf 21 vorzugsweise wiederum zwei Magnetfeldsensoren bzw. Detektoren 22 und 23. Zusätzlich ist eine Magnetfelderzeugungseinrichtung 26 in Form von zum Beispiel einem Permanentmagneten vorgesehen. Das Magnetfeld der Magnetfelderzeugungseinrichtung 26 wird durch die Struktur 32 der Maßstabeinrichtung 30 beeinflusst bzw. "verbogen", sodass auch hier in Abhängigkeit von der Position der einzelnen Detektoren 22 und 23 sich unterschiedliche Feldstärken des Magnetfeldes der Magnetfelderzeugungseinrichtung 26 ergeben, die von den Detektoren 22, 23 erfasst werden. Auch hier können die Detektoren 22, 23 beispielsweise als elektrische Spulen oder Hallsensoren oder dergleichen ausgeführt sein.

An dieser Stelle sei angemerkt, dass in allen Ausgestaltungen und Ausführungsbeispielen die Struktur 32 der Maßstabeinrichtung 30 nicht unbedingt gleiche Längen 34 der Sensorabschnitte 33 aufweisen muss. Möglich ist es auch, dass ein Teil der Sensorabschnitte 33 beispielsweise in einem Abschnitt 63 kürzere (oder längere) Sensorabschnitte aufweist. Möglich ist es auch, dass jeder einzelne Sensorabschnitt 33 eine unterschiedliche Länge aufweist. Unterschiedliche Längen der Sensorabschnitte 33 können beispielsweise sinnvoll sein, um in der Nähe eines Endpunktes automatisch eine höhere Auflösung zu bewirken. Umgekehrt kann in anderen Bereichen ein größerer Abstand bzw. größere Länge eines Sensorabschnitts 33 vorgesehen sein, um die Sensoreinrichtung 20 dort unempfindlicher auszuführen.

Eine bevorzugte Ausführung sieht vor, die Maßstabeinrichtung 30 derart zu gestalten, das in Bewegungsrichtung 18 zwei oder mehr parallele Bahnen verlaufen, die wie einzelne Maßstäbe wirken. Dabei müssen einzelne Maßstäbe nicht über die ganze Bewegungslänge gleichförmig wirken, beispielsweise bei Verwendung als Index an den Enden. Der Detektorkopf 30 wird dann dementsprechend gestaltet und weist zumindest einen zusätzlichen Detektor 22 auf.

Dabei kann durch Verwendung von zwei oder mehr Bahnen in der Maßstabeinrichtung 30 die Position des Detektorkopfs 30 auch absolut bestimmt werden: entweder durch digitale Codierung oder auch zwei Bahnen mit zueinander unterschiedlichen Längen der jeweiligen Sensorabschnitte 33, ähnlich dem Nonius bei Schiebelehren.

Figur 8 zeigt noch eine Ausgestaltung einer Sensoreinrichtung 20, bei der die Maßstabeinrichtung 30 hier keine magnetischen Teile aufweist. Die Maßstabeinrichtung 30 verfügt wieder über eine Struktur 32, wobei hier in periodischen Abständen Leiter 66 in ein an sich nicht-leitendes Material bzw. einen Nicht-Leiter 67 eingefügt sind. Auch hier wird eine Länge 34 eines Sensorabschnitts 33 durch den Abstand zweier Leiter 66 bestimmt.

Der Detektorkopf 21 verfügt in diesem Ausführungsbeispiel über eine Magnetfelderzeugungseinrichtung 26, die dazu ausgebildet ist, ein magnetisches Wechselfeld zur Verfügung zu stellen. Weiterhin weist der Detektorkopf wenigstens einen Detektor und insbesondere wenigstens zwei Detektoren 22, 23 auf, die wiederum zur Erfassung von Magnetfeldern bzw. der Intensität von Magnetfeldern dienen.

Bei der Sensoreinrichtung 20 im Ausführungsbeispiel gemäß Figur 8 erzeugt die Magnetfelderzeugungseinrichtung 26 ein insbesondere hochfrequentes magnetisches Wechselfeld. Dadurch werden in den Leitern 66 Wirbelströme erzeugt, die in den Leitern 66 wiederum Magnetfelder induzieren, die dem erregenden Magnetfeld entgegen gerichtet sind. Dadurch wird das Magnetfeld aus den Leitern 66 verdrängt und zwischen den Leitern 66 verstärkt, sodass in der Darstellung gemäß Figur 8 der Detektor 23 ein stärkeres Signal erhält als der Detektor 22. Bei einer weiteren Relativverschiebung des Detektorkopfs 21 relativ zu der Maßstabeinrichtung 30 ändern sich positionsabhängig die magnetischen Verhältnisse, sodass über die Signale der Detektoren 22, 23 die Position 19 abgeleitet werden kann. Außerdem kann auch auf die Bewegungsrichtung 18 zurückgeschlossen werden.

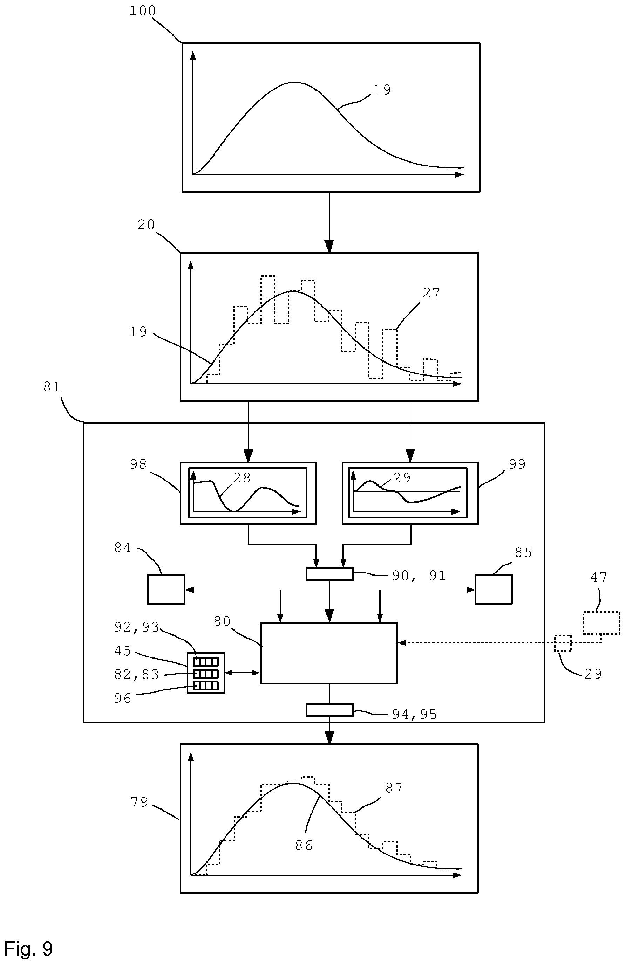

Die mittels der Sensoreinrichtung 20 ermittelten Messwerte werden gemäß dem in Figur 9 dargestellten Ablauf aufbereitet, um wenigstens ein Stoßdämpfer 100 damit zu steuern.

Der Stoßdämpfer 100 federt bei Stößen ein, sodass sich die Position 19 der Anschlusseinheiten 101, 102 relativ zueinander entsprechend ändert. Die Sensoreinrichtung 20 arbeitet primär als Wegsensor und leitet aus dem zeitlichen Verlauf der Position 19 einen entsprechenden Signalverlauf der Sensorsignale 27 ab. Dabei wird das Signal digitalisiert und erfährt schon dadurch ein Digitalisierungsrauschen. Weiterhin können auch andere Effekte zur Entstehung und/oder Erhöhung des Rauschens beitragen. Eine ungeeignete Filterung kann das Rauschen auch verstärken. Deshalb ist ein geeigneter Algorithmus wichtig.

Nach der Erfassung des Wegsignals 27 wird in einer Recheneinheit 98 zur Ermittlung des Geschwindigkeitssignals 28 dessen Wegsignal 27 differenziert. Zusätzlich kann in einer Recheneinheit 99 zur Ermittlung eines Beschleunigungssignals 29 entweder das Wegsignal 27 zweimal abgeleitet werden oder es wird das Geschwindigkeitssignal 28 einmal abgeleitet, um das Beschleunigungssignal 29 zu erhalten.

Das Geschwindigkeitssignal 28 und das Beschleunigungssignal 29 bilden zusammen einen Messwertdatensatz 90 bzw. beim nächsten Durchlauf einen Messwertdatensatz 91. Die Messwertdatensätze werden einer Filtereinrichtung 80 zugeführt und können direkt in einer Speichereinrichtung 45 abgelegt werden. In der Filtereinrichtung 80 werden die Messwertdatensätze 90, 91 nacheinander analysiert. In Abhängigkeit von den Werten eines Messwertdatensatzes 90 wird ein entsprechender Filterparametersatz 82 oder 83 etc. ausgewählt oder abgeleitet und es wird über einen geeigneten Filteralgorithmus aus dem Messwertdatensatz 90 mit dem entsprechend bestimmten Filterparametersatz 82, 83 ein Steuerdatensatz 94 abgeleitet.

Es ist möglich und bevorzugt, dass bei einem Messdatensatz 91 der Filterparametersatz mit dem vorhergehenden Messdatensatz 90 bestimmt wird, da aufgrund der hohen Messfrequenz davon ausgegangen wird, dass sich von einem Messdatensatz zum nächsten Messdatensatz die Werte nicht so viel verändern, dass eine Neubestimmung eines Filterparametersatzes nötig ist.

Möglich und bevorzugt ist es aber auch, dass ein Messdatensatz 91 aufbereitet oder direkt und unaufbereitet in der Speichereinrichtung 45 als hinterlegter Datensatz 93 gespeichert wird. Mit dem nun hinterlegten Datensatz 93 kann ein Filterparametersatz 82, 83 ausgewählt werden. Mit dem Filterparametersatz kann mit dem entsprechenden Filter, beispielsweise einem Kalman-Filter 84 oder einem Mittelwertbilder 85 oder einem anderen Filteralgorithmus oder mit anderen Filtereinrichtungen ein entsprechender Steuerdatensatz 95 berechnet werden.

Nach der Berechnung des Steuerdatensatzes 95 kann iterativ überprüft werden, ob der zugehörige Filterparametersatz der richtige Filterparametersatz war. In jedem Fall oder in manchen Fällen oder bei Überschreitung gewisser Abweichungen kann eine erneute Ermittlung eines geeigneten Filterparametersatzes durchgeführt werden, um damit dann anschließend wieder den aktuellen Steuerdatensatz 95 abzuleiten. Eine solche Iteration kann einmal erfolgen oder mehrmals durchgeführt werden und kann auf eine maximale Anzahl von Durchläufen begrenzt werden.

Zusätzlich kann der Filtereinrichtung auch ein Beschleunigungssignal 29 eines separaten Beschleunigungssensors 47 zugeführt werden. Damit kann auch die Beschleunigung des Zweirades insgesamt berücksichtigt werden.

Bei der Bestimmung eines geeigneten Filterparametersatzes 82, 83 ist es möglich, dass zwei oder mehr unterschiedliche Filterparametersätze 82, 83 vorgesehen sind, wobei die Auswahl eines Filterparametersatzes 82, 83 vorzugsweise danach erfolgt, ob das Geschwindigkeitssignal eine bestimmte Größe überschreitet oder nicht. Zusätzlich kann und wird besonders bevorzugt auch das Beschleunigungssignal herangezogen, um über einen geeigneten Filterparametersatz zu entscheiden.

Im Ausführungsbeispiel werden sowohl das Geschwindigkeitssignal als auch das Beschleunigungssignal zur Auswahl eines geeigneten Filterparametersatzes herangezogen.

In einfachen Fällen erfolgt eine Filterung über eine Mittelwertbildung, wobei unterschiedliche Filterparametersätze sich dadurch unterscheiden können, dass die Anzahl der berücksichtigten Messwerte variiert wird. Liegen beispielsweise kleine Geschwindigkeiten und kleine Beschleunigungswerte vor, können mehr Messwerte aus der Vergangenheit mit berücksichtigt werden als bei hohen Geschwindigkeiten oder hohen Beschleunigungen, da ansonsten bei hohen Geschwindigkeiten und hohen Beschleunigungen ein deutlicher und gegebenenfalls schädlicher Verzug bei der Reaktion des Stoßdämpfers 100 auftreten kann. Umgekehrt bewirkt eine stärkere Glättung von Messwerten bei kleinen Geschwindigkeiten und kleinen Beschleunigungen eine stärkere Herausfilterung von Digitalisierungsrauschen, wodurch das Ansprechverhalten auch bei kleinen und kleinsten Stößen sauber bleibt.

Zum Abschluss ist in Figur 9 ein Diagramm 79 dargestellt bei dem die reale Geschwindigkeit 86 und die zur Steuerung verwendete Geschwindigkeit 87 schematisch aufgetragen sind. Durch die Analyse der Messwerte und entsprechende Berücksichtigung eines Filterparametersatzes sind die Abweichungen zwischen den Kurven gering.

Besonders bevorzugt wird in allen Ausgestaltungen ein Kalman-Filter eingesetzt. Die Filterparametersatz wird bei dem bevorzugten Kalman-Filter wie folgt bestimmt:

Der Filteralgorithmus bekommt hier die (verrauschte) gemessene Geschwindigkeit "Vr" und die (verrauschte) gemessene Beschleunigung "Ar" der Anschlusseinheiten zueinander übergeben. Die Werte für Vr und Ar werden von der Sensoreinrichtung 20 gemessen bzw. daraus abgeleitet. Das Geschwindigkeitssignal und das Beschleunigungssignal können aus dem Sensorsignal abgeleitet werden. Das Beschleunigungssignal kann auch über einen separaten Beschleunigungssensor 47 direkt ermittelt werden.

Mit dem Kalman-Filter werden daraus die geschätzte bzw. abgeleitete Geschwindigkeit "Vg" (Bezugszeichen 87) und gegebenenfalls die geschätzte Beschleunigung "Ag" der Relativbewegung der Anschlusseinheiten bestimmt. Hier werden die Werte Vr und Ar in SI-Einheiten und folglich in "m/s" bzw. in "m/s2" angegeben.

Zunächst werden Variablen "Q0" und "R" und "Vg" und "P" definiert. Beim ersten Durchlauf des Filteralgorithmus werden Startwerte definiert, hier werden vorzugsweise Q0=0,01 und R=5 und Vg=0 und P=1 gesetzt. Vg entspricht der geschätzten bzw. abgeleiteten Geschwindigkeit 87 der Relativbewegung der Anschlusseinheiten zueinander, die für die Bestimmung der Dämpfung verwendet wird.

Anschließend werden bei jedem Durchlauf der Filterparametersatz bestimmt und es werden Werte für Q, Pp, K, Vg und P bestimmt. Die Parameter des Filterparametersatzes 82, 83 hängen von den gemessenen (verrauschten) Werten ab. Dazu wird unterschieden, ob der mathematische Betrag der (verrauscht) gemessenen Beschleunigung "Ar" größer als ein vorgegebener Schwellwert, hier vorzugsweise 5, beträgt. Die im vorherigen Durchlauf geschätzte bzw. abgeleitete Geschwindigkeit "Vg" (aus dem hinterlegten Datensatz 92) wird als Wert Vp definiert durch Vp=Vg (aus der letzten Schleife).

Außerdem wird bestimmt, ob der mathematische Betrag des Wertes Vp (geschätzte Geschwindigkeit Vg der Relativbewegung der Anschlusseinheiten zueinander im letzten Durchlauf) größer als ein weiterer Schwellwert, hier vorzugsweise 0,1 beträgt.

Falls auch nur eine der Bedingungen zutrifft wird der Parameter "Q" auf einen vordefinierten Wert, hier Q=2, gesetzt. Falls keine Bedingung zutrifft, wird Q auf einen anderen vordefinierten Wert, nämlich hier Q=Q0 und somit Q=0,01 gesetzt.

Danach werden Werte Pp, K, Vg und P zu

$$Pp = P+Q.$$

$$K = Pp * 1/(Pp + R)$$

$$Vg = Vp + K * (Vr - Vp)$$

$$P = (1 - K) * Pp$$

ermittelt.

Als Ergebnis des Filteralgorithmus bzw. der Filterfunktion wird eine geschätzte Geschwindigkeit "Vg" (Bezugszeichen 87 in Fig. 8) zurückgegeben. Es kann auch eine geschätzte Beschleunigung "Ag" ermittelt und zurückgegeben werden. Die Filterparameter und berechneten Werte werden wenigstens bis zum nächsten Durchgang als Filterparametersatz 83 gespeichert. Beim nächsten Durchlauf wird der Filterparametersatz 83 zum Filterparametersatz 82.

Die Geschwindigkeit 87 wird dann zur Steuerung verwendet.

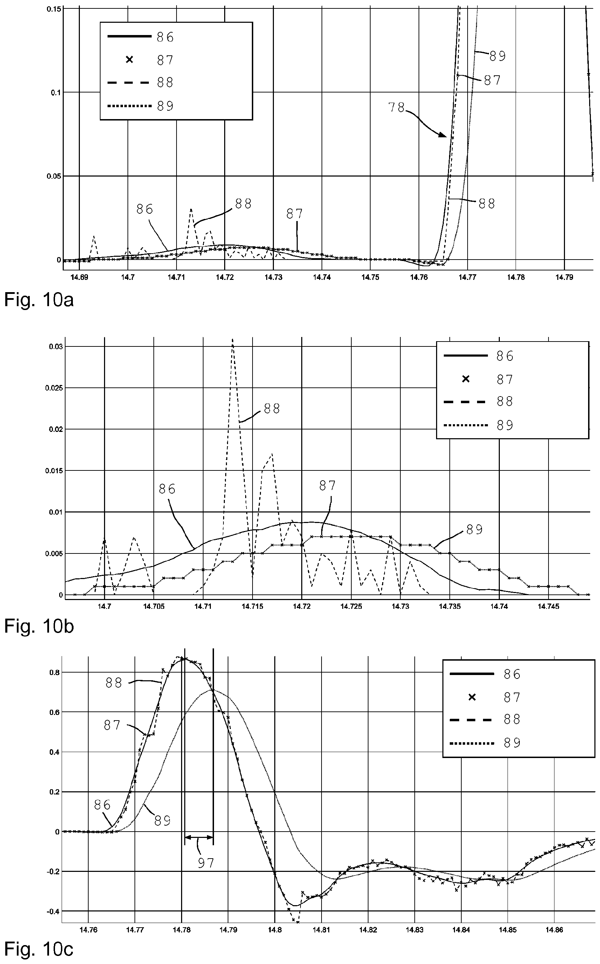

In den Figuren 10a bis 10c sind schließlich reale Werte aufgetragen, die mit dem Stoßdämpfer gemäß Figur 4 aufgezeichnet wurden.

Dabei zeigt Figur 10a den zeitlichen Ablauf über etwas mehr als eine Zehntelsekunde, innerhalb der zunächst nur sehr kleine Geschwindigkeiten vorliegen, während gegen Ende des abgebildeten Zeitraums ein größerer Stoß erfolgt.

Durchgezogen eingezeichnet ist die reale Geschwindigkeit 86, die auch über zusätzliche Sensoren ermittelt wurde und die nach der Messung nachträglich aufwendig ermittelt wurde. Im normalen Fahrbetrieb steht die reale Geschwindigkeit 86 in der Messqualität zur Steuerung nicht zur Verfügung. Die reale Geschwindigkeit 86 ist hier nur zum Vergleich abgebildet.

Die gestrichelte Linie 88 zeigt die mit einem ersten Filterparametersatz 82 gefilterte Geschwindigkeit 88, die zu Beginn des dargestellten Messzeitraums erheblich von der realen Geschwindigkeit 86 abweicht.

Die punktierte Linie 89 zeigt den Geschwindigkeitsverlauf, der mit einem zweiten Filterparametersatz 83 mit stärkerer Filterung ermittelt wurde. Zu Beginn des Messzeitraumes zeigt die Kurve 89 einen erheblich glatteren Verlauf als die gestrichelt dargestellte Kurve 88. Die Abweichungen von dem Verlauf der realen Geschwindigkeit 86 sind relativ gering. Erkennbar ist zwar ein leichter Zeitversatz, aber dieser spielt bei diesen kleinen Stößen keine Rolle.

Mit dem mit Beginn eines stärkeren Stoßes bei etwa 14,76 Sekunden steigt der Verlauf der realen Geschwindigkeit 86 sehr steil an. Die gestrichelte Kurve 88 folgt dem realen Geschwindigkeitsverlauf 86 praktisch verzögerungsfrei, während die punktierte Linie 89 einen deutlichen Zeitversatz aufweist.

Durch die Kriterien der Analyse der Messwerte wird hier bei der Verarbeitung der Messwerte eine Umschaltung der Filterparametersätze vorgenommen, wobei bis etwa 14,765 Sekunden für die Steuerung der punktierte Kurvenverlauf 89 genommen wird und bei dem ab etwa 14,765 Sekunden von der Kurve 89 auf die Kurve 88 umgeschaltet wird. Der Umschaltzeitpunkt 78 ist eingezeichnet. Zu diesem Zeitpunkt hat die gemessene Geschwindigkeit und/oder die gemessene Beschleunigung ein vorbestimmtes Maß überschritten, sodass ein anderer Filterparametersatz ausgewählt wird. In allen Fällen sind auch mehr als zwei Filterparametersätze möglich, beispielsweise einen mit geringer, ein mit mittlerer und einen mit stärkerer Filterung oder Glättung.

Mit den eingezeichneten Kreuzen 87 wird der Steuerungsverlauf abgebildet, wobei die Kreuze 87 zunächst auf der Kurve 89 (stärkere Glättung) und später auf der Kurve 88 (schwächere Glättung) liegen. So kann über den gesamten Messbereich eine ausreichende Übereinstimmung und hohe Genauigkeit erzielt werden.

In besonders einfachen Fällen kann z. B. eine stärkere Glättung eine einfache Mittelung der letzten fünf oder zehn Messwerte umfassen, während bei einer schwächeren Glättung nur die letzten zwei oder drei Werte gemittelt werden. Dabei kann die Stärke der Gewichtung von dem zeitlichen Abstand abhängen (Gewichtung zum Beispiel 25%, 50 und 100% für den vorletzten Messwert, den letzten Messwert und den aktuellen Wert).

Figur 10b zeigt den ersten Zeitabschnitt aus Figur 9 vergrößert, sodass die Abweichungen der Kurve 88 von dem realen Geschwindigkeitsverlauf 86 sehr deutlich sichtbar sind. Zum Zeitpunkt von etwa 14,713 Sekunden wird bei der Kurve 88 ein Geschwindigkeitswert ausgegeben der viermal so groß ist wie der tatsächlich real vorhandene Geschwindigkeitswert. Zu diesem Zeitpunkt ist eine Abweichung bei der Kurve 89 von der realen Geschwindigkeit 86 sehr viel geringer.

Figur 10c zeigt den Verlauf des stärkeren Stoßes am Ende des in Figur 10a dargestellten Zeitraums, wobei hier eine gute Übereinstimmung der Kurvenverläufe 88 und des realen Geschwindigkeitsverlaufs 86 erkennbar sind. Der Zeitversatz 97 zwischen dem Maximum des realen Geschwindigkeitsverlaufs 86 und dem Maximum der Kurve 89 beträgt weit mehr als 5 ms und ist für derartige Stöße zu groß, um optimale Dämpfungseigenschaften zur Verfügung zu stellen.

Insgesamt liefert die Erfindung durch eine Sensoreinrichtung 20 mit hoher Messauflösung und durch die Filterung der Messdaten, wobei die Filterparameter in Abhängigkeit von den Messdaten ausgewählt werden, in allen Leistungsbereichen der Stoßdämpfer 100 ein ausreichend schnelles und glattes und jeweils angepasstes Ansprechverhalten und somit eine verbesserte Fahrwerksteuerung 300.

**Bezugszeichenliste:**

| | | | |
|---|---|---|---|
| 1 | Dämpfereinrichtung | 44 | Negativkammer |
| 2 | Dämpfergehäuse | 45 | Speichereinrichtung |
| 3 | erste Dämpferkammer | 46 | Steuereinrichtung |
| 4 | zweite Dämpferkammer | 47 | Beschleunigungssensor |
| 5 | Dämpfungskolben | 48 | Daten |
| 6 | Kolbenstange | 49 | Display, Anzeige |
| 7 | Dämpfungskanal, Strömungskanal | 50 | Dämpferkennlinie |
| | | 52 | Schritt |
| 8 | Dämpfungsventil | 53 | Internet |
| 9 | MRF | 54 | Netzwerkschnittstelle |

(fortgesetzt)

| | | | |
|---|---|---|---|
| 10 | Dämpferkennlinie | 55 | Funknetzschnittstelle |
| 11 | elektrische Spuleneinrichtung | 56 | Schritt |
| | | 57 | Touchscreen, grafische |
| 12 | Steuerkreislauf | | Bedieneinheit |
| 13 | Sammelraum | 58 | Halter |
| 14,15 | Strömungsöffnung | 60 | Steuereinrichtung |
| 16 | Durchgangsöffnung | 61 | Batterieeinheit |
| 17 | Einwegventil | 63 | Abschnitt |
| 18 | Bewegungsrichtung- | 64 | Füllmasse |
| 19 | Position | 65 | Spitze |
| 20 | Sensoreinrichtung | 66 | Leiter |
| 21 | Detektorkopf | 67 | Isolator |
| 22,23 | Detektor | 70 | Schritt |
| 26 | Magnetfelderzeugungseinrichtung | 71 | Ausgleichsraum |
| | | 72 | Ausgleichskolben |
| 27 | Sensorsignal | 73 | Halter |
| 28 | Geschwindigkeitssignal | 75 | Kolbenstange |
| 29 | Beschleunigungssignal | 76 | Federgehäuse |
| 30 | Maßstabeinrichtung | 77 | Deckel |
| 31 | Messstrecke- | 78 | Umschaltpunkt |
| 32 | Struktur | 79 | Diagramm |
| 33 | Sensorabschnitt | 80 | Filtereinrichtung |
| 34 | Länge | 81 | Analyseeinrichtung |
| 35 | Felderzeugungseinheit | 82, 83 | Filterparametersatz |
| 36 | Ringleiter | 84 | Kalman-Filter |
| 37 | Federungskolben | 85 | Mittelwertbilder |
| 38 | Kabel | 86 | reale Geschwindigkeit |
| 39 | Positionsmarke | 87 | verwendete |
| 40 | Dämpfungskolbeneinheit | | Geschwindigkeit |
| 41 | Kern | 88, 89 | Geschwindigkeit |
| 42 | Federeinrichtung | 90, 91 | Messdatensatz |
| 43 | Positivkammer | 92, 93 | hinterlegter Datensatz |
| 94, 95 | Steuerdatensatz | 263 | Steuerventil |
| 96 | Grenzwertsatz | 265 | Leitung |
| 97 | Zeitversatz | 270 | Positivkammer |
| 98, 99 | Recheneinheit | 271,272 | Teilkammer |
| 100 | Stoßdämpfer | 273 | Steuerventil |
| 101, 102 | Anschlusseinheit | 280 | Negativkammer |
| 103 | Dämpferhub | 281,282 | Teilkammer |
| 111 | Rad, Vorderrad | 283 | Steuerventil |
| 112 | Rad, Hinterrad | 290 | Ausgleichseinrichtung |
| 113 | Rahmen | 291 | Ausgleichsstößel |
| 114 | Federgabel | 292 | Position |
| 115 | Hinterraddämpfer | 293 | Ausgleichsventil |
| 116 | Lenker | 294 | Kabel, Steuerleitung |
| 117 | Sattel | 297 | Anschlag |
| 120 | Trageinrichtung | 300 | Fahrwerksteuerung |
| 150 | Bedieneinrichtung | 401 | Fahrradkomponente |
| 151 | Betätigungseinrichtung | 408 | Erkennungseinrichtung |
| 152 | Einstelleinrichtung | 413 | Sendeeinheit |

(fortgesetzt)

| 153 | mechanische Eingabeeinheit | 418 | Speichereinrichtung |
|---|---|---|---|
|  |  | 423 | Empfangseinheit |
| 154-156 | Bedienelement | 424 | Ultraschallsensor |
| 160 | Smartphone | 433 | Halteeinrichtung |
| 161-162 | Bereich | 434 | Infrarotsensor |
| 200 | Zweirad | 444 | Radarsensor |
| 260 | Federeinheit |  |  |

**Patentansprüche**

1. Fahrwerksteuerung (300) für ein wenigstens teilweise muskelbetriebenes Zweirad (200) mit wenigstens einem steuerbaren Stoßdämpfer (100) umfassend zwei relativ zueinander bewegbare Anschlusseinheiten (101, 102), zwischen denen zur Dämpfung von Stößen wenigstens eine Dämpfereinrichtung (1) mit einem Dämpfergehäuse (2) und wenigstens eine Federeinrichtung (42) mit einem Federgehäuse (76) vorgesehen sind, wobei weiterhin wenigstens eine Sensoreinrichtung (20) zur Erfassung von Messdaten wenigstens über eine Relativbewegung der Anschlusseinheiten (101, 102) zueinander und eine Steuereinrichtung (46) zur Steuerung des Stoßdämpfers (100) vorgesehen sind,
   wobei die Sensoreinrichtung (20) wenigstens eine mit einer der Anschlusseinheiten (101, 102) des Stoßdämpfers (100) verbundene Maßstabeinrichtung (30) umfasst und sich in einer Bewegungsrichtung (18) der Relativbewegung über eine Messstrecke (31) erstreckt,
   und wobei die Sensoreinrichtung (20) einen mit der Maßstabeinrichtung (30) zusammenwirkenden und mit der Anderen der Anschlusseinheiten (102, 101) des Stoßdämpfers (1) verbundenen Detektorkopf (21) zur Ermittlung einer Position (19) des Stoßdämpfers (1) umfasst,
   **dadurch gekennzeichnet,**
   **dass** die Maßstabeinrichtung (30) über der Messstrecke (31) eine Struktur (32) mit sich periodisch wiederholenden magnetischen Eigenschaften aufweist.

2. Fahrwerksteuerung (300) nach Anspruch 1, wobei im Wesentlichen jede Periode der periodischen Struktur einen Sensorabschnitt der Sensoreinrichtung bildet und wobei jeder Sensorabschnitt (33) eine Länge (34) in Bewegungsrichtung (18) von wenigstens 0,25 mm aufweist.

3. Fahrwerksteuerung (300) nach einem der vorhergehenden Ansprüche, wobei der Detektorkopf (21) eine Mehrzahl von Detektoren (22, 23) umfasst, deren Detektorsignale auswertbar sind, wobei die Detektoren (22, 23) insbesondere in Bewegungsrichtung (18) versetzt angeordnet sind.

4. Fahrwerksteuerung (300) nach Anspruch 2 und 3, wobei eine Signalstärke der einzelnen Detektorsignale auswertbar ist, um eine Bestimmung der Position (19) mit einer Ortsauflösung zu ermöglichen, die kleiner ist als eine Länge (34) eines Sensorabschnitts (33).

5. Fahrwerksteuerung (300) nach dem vorhergehenden Anspruch, wobei ein Verhältnis einer Länge (34) eines Sensorabschnitts (33) zu einer Ortsauflösung der Bestimmung der Position (19) größer als 100 oder größer als 1000 beträgt.

6. Fahrwerkssteuerung (300) nach einem der Ansprüche 3 oder 4, wobei in der Sensoreinrichtung (20) die Signale von zumindest einem Detektor (22, 23) derart ausgewertet werden, dass über eine Schnittstelle (54, 55) von der Position oder Bewegung des Stoßdämpfers (100) abhängige Größen wie absolute oder relative Position, Geschwindigkeit, Richtung, Beschleunigung oder Ruck ausgegeben werden können.

7. Fahrwerksteuerung (300) nach einem der vorhergehenden Ansprüche, wobei die Maßstabeinrichtung (30) eine Vielzahl von Permanentmagneten als Magneteinheiten (35) umfasst, und/oder wobei eine Mehrzahl von jeweils zwei unmittelbar benachbarten Magneteinheiten (35) eine unterschiedliche Polung aufweist.

8. Fahrwerksteuerung (300) nach einem der vorhergehenden Ansprüche, wobei die Maßstabeinrichtung (30) wenigstens teilweise ferromagnetisch ausgebildet ist und eine periodische und ferromagnetisch ausgebildete Struktur aufweist.

9. Fahrwerksteuerung (100) nach einem der vorhergehenden Ansprüche, wobei die Maßstabeinrichtung (30) eine leiterartige und/oder zahnartige Struktur aufweist.

10. Fahrwerksteuerung (300) nach einem der vorhergehenden Ansprüche, wobei an dem Detektorkopf (21) wenigstens eine Magnetfelderzeugungseinrichtung (26) angeordnet ist.

11. Fahrwerksteuerung (300) nach dem vorhergehenden Anspruch, wobei der Detektorkopf (21) dazu ausgebildet und eingerichtet ist, mit der Magnetfelderzeugungseinrichtung (26) ein magnetisches Wechselfeld zu erzeugen und wobei der Detektorkopf (21) dazu ausgebildet und eingerichtet ist, eine durch die Maßstabeinrichtung (30) beeinflusste Feldstärke des magnetischen Wechselfeldes zu erfassen, um aus der Feldstärke die Position des Stoßdämpfers (100) abzuleiten.

12. Fahrwerksteuerung (300) nach einem der vorhergehenden Ansprüche, wobei das Federgehäuse (76) die Dämpfereinrichtung (1) wenigstens abschnittsweise umgibt, und wobei die Dämpfereinrichtung (1) mit einem Federungskolben (37) verbunden ist, der die Luftkammer in eine Positivkammer (43) und eine Negativkammer (44) teilt, der Detektorkopf (21) wenigstens teilweise innerhalb des Federgehäuses (76) angeordnet ist oder wobei der Detektorkopf (21) an dem Federungskolben (37) befestigt ist.

13. Fahrwerksteuerung (100) nach einem der fünf vorhergehenden Ansprüche, wobei das Federgehäuse (76) wenigstens abschnittsweise oder auch vollständig aus aus wenigstens einem Faserverbundwerkstoff besteht.

14. Fahrwerksteuerung (100) nach einem der sieben vorhergehenden Ansprüche, wobei die Maßstabeinrichtung (30) an dem Federgehäuse (76) angebracht oder darin integriert ist.

15. Fahrwerksteuerung (100) nach einem der vorhergehenden Ansprüche, wobei die Maßstabeinrichtung (30) zusätzliche absolute Positionsmarken (39) aufweist.

**Claims**

1. Suspension control (300) for an at least partially muscle-powered two-wheeled vehicle (200) having at least one controllable shock absorber (100) comprising two connecting units (101, 102) movable relative to one another between which for damping shocks at least one damper device (1) with a damper housing (2) and at least one suspension device (42) with a spring housing (76) are provided wherein furthermore at least one sensor device (20) for sensing measurement data at least by way of a relative motion of the connecting units (101, 102) to one another and a control device (46) for controlling the shock absorber (100) are provided,
   wherein the sensor device (20) comprises at least one scaling device (30) connected with one of the connecting units (101, 102) of the shock absorber (100) and extends in a direction of movement (18) of the relative motion over a measuring distance (31),
   and wherein the sensor device (20) comprises a detecting head (21) interacting with the scaling device (30) and connected with the other of the connecting units (102, 101) of the shock absorber (1) for obtaining a position (19) of the shock absorber (1),
   **characterized in**
   **that** the scaling device (30) comprises a pattern (32) of periodically repeated magnetic properties over the measuring distance (31).

2. The suspension control (300) according to claim 1 wherein substantially each period of the periodic pattern forms a sensor section of the sensor device and wherein each sensor section (33) has a length (34) in the direction of movement (18) of at least 0.25 mm.

3. The suspension control (300) according to any of the preceding claims wherein the detecting head (21) comprises a plurality of detectors (22, 23) whose detector signals can be analyzed
   wherein the detectors (22, 23) are offset to one another in particular in the direction of movement (18).

4. The suspension control (300) according to claims 2 and 3 wherein a signal strength of each of the individual detector signals can be analyzed so as to enable positioning (19) with a local resolution that is smaller than a length (34) of one sensor section (33).

5. The suspension control (300) according to the preceding claim
wherein a ratio of a length (34) of a sensor section (33) to a local resolution of the positioning (19) is larger than 100 or larger than 1000.

6. The suspension control (300) according to any of the claims 3 or 4 wherein the signals of at least one detector (22, 23) are analyzed in the sensor device (20) in such a way that an interface (54, 55) can output magnitudes dependent on the position or movement of the shock absorber (100) such as absolute or relative position, speed, direction, acceleration, or jolts.

7. The suspension control (300) according to any of the preceding claims wherein the scaling device (30) comprises a plurality of permanent magnets for magnetic units (35) and/or wherein a plurality of pairs of immediately adjacent magnetic units (35) are different in polarity.

8. The suspension control (300) according to any of the preceding claims wherein the scaling device (30) is ferromagnetic at least in part and comprises a periodic, ferromagnetic pattern.

9. The suspension control (100) according to any of the preceding claims wherein the scaling device (30) comprises a ladder-type and/or tooth-like pattern.

10. The suspension control (300) according to any of the preceding claims wherein at least one magnetic field generating device (26) is disposed on the detecting head (21).

11. The suspension control (300) according to the preceding claim
wherein the detecting head (21) is configured and set up to generate a magnetic alternating field by means of the magnetic field generating device (26) and wherein the detecting head (21) is configured and set up to sense a field intensity of the magnetic alternating field influenced by the scaling device (30) so as to derive the position of the shock absorber (100) from the field intensity.

12. The suspension control (300) according to any of the preceding claims wherein the spring housing (76) surrounds the damper device (1) at least in portions and wherein the damper device (1) is connected with a suspension piston (37) which partitions the air chamber into a positive chamber (43) and a negative chamber (44) wherein the detecting head (21) is disposed within the spring housing (76) at least in part or wherein the detecting head (21) is attached to the suspension piston (37).

13. The suspension control (100) according to any of the five preceding claims wherein the spring housing (76) consists at least in sections or else entirely of at least one fibrous composite material.

14. The suspension control (100) according to any of the seven preceding claims wherein the scaling device (30) is attached to or incorporated in the spring housing (76).

15. The suspension control (100) according to any of the preceding claims wherein the scaling device (30) comprises additional absolute positioning markers (39).

**Revendications**

1. Commande de châssis (300) pour une bicyclette (200) actionnée au moins en partie par force musculaire, ayant au moins un amortisseur de chocs (100) commandable comprenant deux unités de raccordement (101, 102) qui sont déplaçables l'une par rapport à l'autre et entre lesquelles sont prévus, pour l'amortissement de chocs, au moins un dispositif amortisseur (1) ayant un boîtier d'amortisseur (2) et au moins un dispositif à ressort (42) ayant un boîtier à ressort (76), dans laquelle, en outre, au moins un dispositif à capteur (20) destiné à détecter des données de mesure au moins relatives à un mouvement relatif des unités de raccordement (101, 102) l'une par rapport à l'autre et un dispositif de commande (46) destiné à commander l'amortisseur de chocs (100) sont prévus, dans laquelle ledit dispositif à capteur (20) comprend au moins un dispositif d'échelle graduée (30) relié à l'une des unités de raccordement (101, 102) de l'amortisseur de chocs (100) et s'étend dans une direction de déplacement (18) du mouvement relatif sur une distance de mesure (31), et dans laquelle ledit dispositif à capteur (20) comprend une tête de détecteur (21) destinée à déterminer une position (19) de l'amortisseur de chocs (1), qui agit de concert avec le dispositif d'échelle graduée (30) et est reliée à l'autre des unités de raccordement (102, 101) de l'amortisseur de chocs (1),

**caractérisée par le fait que** ledit dispositif d'échelle graduée (30) présente, sur la distance de mesure (31), une structure (32) ayant des propriétés magnétiques se répétant périodiquement.

2. Commande de châssis (300) selon la revendication 1, dans laquelle pour l'essentiel chaque période de la structure périodique forme une section de capteur du dispositif à capteur, et dans laquelle chaque section de capteur (33) présente une longueur (34) dans la direction de déplacement (18) de 0,25 mm au moins.

3. Commande de châssis (300) selon l'une quelconque des revendications précédentes, dans laquelle la tête de détecteur (21) comprend une pluralité de détecteurs (22, 23) dont les signaux de détecteur peuvent être évalués, les détecteurs (22, 23) étant disposés, en particulier, de manière à être décalés dans la direction de déplacement (18).

4. Commande de châssis (300) selon la revendication 2 et 3, dans laquelle une intensité de signal des signaux de détecteur individuels peut être évaluée afin de permettre de déterminer la position (19) avec une résolution locale qui est inférieure à une longueur (34) d'une section de capteur (33).

5. Commande de châssis (300) selon l'une quelconque des revendications précédentes, dans laquelle un rapport d'une longueur (34) d'une section de capteur (33) à une résolution locale de la détermination de la position (19) est supérieur à 100 ou supérieur à 1000.

6. Commande de châssis (300) selon l'une quelconque des revendications 3 ou 4, dans laquelle les signaux d'au moins un détecteur (22, 23) sont évalués dans le dispositif à capteur (20) de telle sorte que des grandeurs qui sont fonction de la position ou du mouvement de l'amortisseur de chocs (100), telles que la position absolue ou relative, la vitesse, la direction, l'accélération ou l'à-coup, peuvent être sorties via une interface (54, 55).

7. Commande de châssis (300) selon l'une quelconque des revendications précédentes, dans laquelle le dispositif d'échelle graduée (30) comprend, en tant qu'unités d'aimant (35), une pluralité d'aimants permanents, et/ou dans laquelle une pluralité de respectivement deux unités d'aimant (35) immédiatement voisines présente une polarité différente.

8. Commande de châssis (300) selon l'une quelconque des revendications précédentes, dans laquelle le dispositif d'échelle graduée (30) est réalisé de manière ferromagnétique au moins en partie et présente une structure périodique et réalisée de manière ferromagnétique.

9. Commande de châssis (300) selon l'une quelconque des revendications précédentes, dans laquelle le dispositif d'échelle graduée (30) présente une structure de type échelle et/ou de type à dents.

10. Commande de châssis (300) selon l'une quelconque des revendications précédentes, dans laquelle au moins un dispositif de génération de champ magnétique (26) est disposé sur la tête de détecteur (21).

11. Commande de châssis (300) selon la revendication précédente, dans laquelle ladite tête de détecteur (21) est configurée et agencée pour générer un champ alternatif magnétique avec le dispositif de génération de champ magnétique (26), et dans laquelle la tête de détecteur (21) est configurée et agencée pour détecter une intensité de champ du champ alternatif magnétique, influencée par le dispositif d'échelle graduée (30), afin de déduire de l'intensité de champ la position de l'amortisseur de chocs (100).

12. Commande de châssis (300) selon l'une quelconque des revendications précédentes, dans laquelle ledit boîtier à ressort (76) entoure au moins par sections le dispositif amortisseur (1), et dans laquelle le dispositif amortisseur (1) est relié à un piston formant ressort (37) qui divise la chambre à air en une chambre positive (43) et une chambre négative (44), la tête de détecteur (21) est disposée au moins en partie à l'intérieur du boîtier à ressort (76) ou dans laquelle la tête de détecteur (21) est fixée sur ledit piston formant ressort (37).

13. Commande de châssis (300) selon l'une quelconque des cinq revendications précédentes, dans laquelle le boîtier à ressort (76) est fait au moins par sections ou aussi complètement d'au moins un matériau composite fibreux.

14. Commande de châssis (300) selon l'une quelconque des sept revendications précédentes, dans laquelle le dispositif d'échelle graduée (30) est monté sur le boîtier à ressort (76) ou est intégré dans celui-ci.

15. Commande de châssis (300) selon l'une quelconque des revendications précédentes, dans laquelle le dispositif d'échelle graduée (30) présente des repères de position (39) absolus supplémentaires.

Fig. 1

Fig. 2

Fig. 3a

Fig. 3b

Fig. 4

Fig. 5

Fig. 6

Fig. 7

Fig. 8

Fig. 9

Fig. 10a

Fig. 10b

Fig. 10c

**IN DER BESCHREIBUNG AUFGEFÜHRTE DOKUMENTE**

**In der Beschreibung aufgeführte Patentdokumente**

- DE 102012012532 A1